# FASCICULE DE BREVET EUROPEEN

(11) **EP 3 116 135 B1**
(45) Date de publication et mention de la délivrance du brevet: **16.06.2021**
(21) Numéro de dépôt: 16156148.5
(22) Date de dépôt: 17.02.2016
(51) Int. Cl.: H04B 3/466, H04B 3/54, H04L 27/26, H04L 25/02

(54) **PROCÉDÉ DE TRAITEMENT D'UN SIGNAL ISSU D'UN CANAL DE TRANSMISSION, EN PARTICULIER UN SIGNAL VÉHICULÉ PAR COURANT PORTEUR EN LIGNE, ET NOTAMMENT L'ESTIMATION DU CANAL, ET RÉCEPTEUR CORRESPONDANT**
VERARBEITUNGSVERFAHREN EINES AUS EINEM ÜBERTRAGUNGSKANAL STAMMENDEN SIGNALS, DAS ONLINE DURCH TRÄGERSTROM ÜBERTRAGEN WIRD, UND INSBESONDERE DIE SCHÄTZUNG DES KANALS SOWIE ENTSPRECHENDER EMPFÄNGER
METHOD FOR PROCESSING A SIGNAL FROM A TRANSMISSION CHANNEL, IN PARTICULAR A SIGNAL CARRIED OVER POWER LINE, AND IN PARTICULAR THE CHANNEL ESTIMATION, AND CORRESPONDING RECEIVER

(30) Priorité: 09.07.2015 FR 1556487
(43) Date de publication de la demande: 11.01.2017
(73) Titulaire: STMicroelectronics (Rousset) SAS, 13790 Rousset (FR)
(72) Inventeur: DEMAJ, Pierre, 06200 Nice (FR); BOUVET, Yoann, 06650 Opio (FR)
(74) Mandataire: Casalonga

(56) Documents cités:
- WO-A1-2014/037066
- JP-A- 2007 258 897
- US-A1- 2012 195 384
- US-A1- 2014 355 621
- Mario Bogdanovic ET AL: "IMPROVED LEAST SQUARE CHANNEL ESTIMATION ALGORITHM FOR OFDM BASED COMMUNICATION OVER POWER LINES", The Mediterranean Journal of Computers and Networks, 30 juillet 2014 (2014-07-30), pages 232-238, XP055314959, Extrait de l'Internet: URL:https://bib.irb.hr/datoteka/717715.Bog danovic_MEDJCN.pdf [extrait le 2016-10-28]
- CORTES J A ET AL: "Comparative Analysis of Pilot-based Channel Estimators for DMT Systems Over Indoor Power-line Channels", 2007 IEEE INTERNATIONAL SYMPOSIUM ON POWER LINE COMMUNICATIONS AND ITS APPLICATIONS : [2007 IEEE ISPLC] ; PISA, ITALY, 26 - 28 MARCH 2007, IEEE SERVICE CENTER, PISCATAWAY, NJ, 1 March 2007 (2007-03-01), pages 372-377, XP031176363, DOI: 10.1109/ISPLC.2007.371153 ISBN: 978-1-4244-1089-7

## Description

Des modes de mise en œuvre et de réalisation de l'invention concernent la transmission d'informations sur un canal de transmission, et notamment lorsque ce canal est une ligne électrique, la transmission d'informations par courant porteur en ligne (PLC : Power Line Communications), et plus particulièrement l'estimation de la fonction de transfert du canal de transmission.

Des modes de mise en œuvre et de réalisation de l'invention sont compatibles notamment mais non exclusivement avec la norme PLC-G3 telle que définie par exemple dans la version d'avril 2015 du document de l'Alliance G3-PLC intitulé «Narrowband OFDM PLC specifications for G3-PLC networks » à laquelle l'homme du métier pourra se référer à toutes fins utiles.

La technologie de courant porteur en ligne vise à transmettre des données numériques en exploitant l'infrastructure existante du réseau électrique. Elle permet notamment le relevé à distance de compteurs électriques, les échanges entre véhicules électriques et les bornes de recharge ou encore la gestion et le contrôle des réseaux d'énergie (smart grid)

La technologie de courant porteur en ligne (PLC) incorpore notamment la communication par courant porteur en ligne bande étroite (Narrow band Power line Communication : N-PLC) qui est généralement définie comme une communication sur une ligne électrique opérant à des fréquences de transmission jusqu'à 500 KHz.

La communication N-PLC utilise ainsi généralement les bandes de fréquences définies notamment par le comité européen de normalisation électrotechnique (CENELEC) ou par la Commission Fédérale des Communications (FCC).

Ainsi si l'on considère la bande de fréquences CENELEC A (3-95 kHz), les fréquences de transmission se situent entre 35,9375 et 90,625 KHz pour la norme PLC-G3.

La performance globale d'un récepteur dépend fortement de la qualité de son estimation de canal, c'est-à-dire de l'estimation de la fonction de transfert de ce canal.

Il est connu qu'un canal de transmission peut varier en temps, en fréquence, en phase et en amplitude.

Par ailleurs les signaux véhiculés par courant porteur en ligne et reçus par le récepteur résultent d'une combinaison de plusieurs signaux ayant emprunté au sein du canal de transmission (la ligne électrique) plusieurs chemins ou trajets de propagation ayant chacun son propre retard temporel et sa propre atténuation (le canal de transmission est un canal de transmission multi-trajets). Il peut alors en résulter une forte atténuation de certaines fréquences.

Par ailleurs, les propriétés et caractéristiques des réseaux électriques ne sont pas connues a priori et sont variables dans le temps. Ainsi les impédances de certains objets branchés par l'utilisateur varient avec la tension. C'est le cas par exemple des lampes halogènes ou des objets comportant des redresseurs de tension.

Lorsqu'un utilisateur branche de tels objets il en résulte alors une variation périodique de la fonction de transfert du canal de transmission. Le canal est alors considéré comme linéaire et cyclo-stationnaire ou « linéaire et variant temporellement de façon périodique », ce qui correspond à l'acronyme anglosaxon LPTV (« Linear Periodically Time Varying »).

Dans d'autres situations le canal peut être considéré comme linéaire et temporellement invariant (LTI : « Linear Time Invariant).

L'article "Comparative Analysis of Pilot-based Channel Estimators for DMT Systems Over Indoor Power-line Channels", par. J.A. Cortés, A. Tonello et L. Diéz, 2007 IEEE ISPLC, pages 372-377, XP031176363, présente une analyse de l'état d'un canal PLC.

Les récepteurs actuels, compatibles avec la norme PLC-G3, ne sont pas adaptés pour effectuer des estimations de canal lorsque celui-ci est temporellement variable. En effet, la norme PLC-G3 ne prévoit d'utiliser que deux symboles OFDM en tant que symboles pilotes pour estimer totalement la fonction de transfert du canal.

Aussi, lorsque le canal varie, et notamment lorsqu'on est en présence d'un canal cyclo-stationnaire, l'estimation du canal est erronée, voire impossible, et conduit par conséquent à des erreurs de décodage des symboles.

Selon un mode de mise en œuvre et de réalisation, il est proposé de limiter le risque d'erreurs de décodage dues notamment à une estimation de canal erronée.

Selon un autre mode de mise en œuvre et de réalisation, il est proposé une estimation de canal relativement simple même dans le cas où le canal est considéré comme cyclo-stationnaire, et compatible avec la norme PLC-G3.

Selon un aspect, il est proposé un procédé de traitement d'un signal analogique de canal issu d'un canal de transmission, par exemple une ligne électrique, le signal étant alors véhiculé par courant porteur de ligne (PLC), le procédé comprenant au moins une phase de détection de l'état du canal de transmission à partir d'un signal numérique issu d'une conversion analogique/numérique du signal analogique de canal de façon à détecter si le canal de transmission est considéré, sur un intervalle de temps, comme étant linéaire et temporellement invariant (LTI) ou bien comme étant linéaire et cyclo-stationnaire (LPTV).

Le signal analogique de canal qui va subir la conversion analogique/numérique peut être par exemple le signal analogique directement issu du canal ou bien comme c'est généralement le cas, le signal analogique délivré par un étage d'entrée analogique (comportant notamment des filtres passe-bande, des filtres passe-bas et un amplificateur) connecté sur le canal de transmission.

Le procédé selon cet aspect se distingue de l'art antérieur par le fait que préalablement à une estimation de canal suivie d'un décodage des symboles, on détecte l'état du canal de transmission, et ce en temps réel à partir du signal reçu, ce qui permet de limiter le risque d'erreurs de décodage dues à une estimation de canal erronée.

Ceci permet en effet de prendre une décision quant à la suite des traitements à appliquer, comme par exemple suspendre temporairement le décodage ou bien utiliser une estimation de canal appropriée aux différents états du canal et améliorer ainsi la performance globale du récepteur.

Le signal analogique de canal est par exemple conforme à la norme PLC-G3.

Lorsque le signal analogique de canal véhicule des trames de symboles, la phase de détection peut être effectuée au cours de la réception d'au moins une trame, l'état détecté du canal étant considéré comme valable pour toute la durée de ladite au moins une trame, c'est-à-dire qu'un canal détecté comme étant cyclo-stationnaire est considéré comme étant cyclo-stationnaire pour toute la durée de ladite au moins une trame, et qu'un canal détecté comme étant temporellement invariant est considéré comme étant temporellement invariant pour toute la durée de ladite au moins une trame.

Cela étant, il est préférable que la phase de détection soit effectuée au cours de la réception de chaque trame car l'état du canal peut éventuellement changer d'une trame à l'autre. Et, là encore, on considère que l'état détecté du canal lors de la réception d'une trame courante est considéré comme valable pour toute la durée de cette trame courante.

Selon un mode de mise en œuvre, ladite phase de détection comprend
- une pluralité d'estimations de canal respectivement effectuées à partir d'une pluralité de symboles de référence de ladite trame reçue de façon à obtenir une pluralité de fonctions de transfert dudit canal,
- une détermination d'au moins une différence de phase entre au moins une paire de fonctions de transfert ;
et la détection dudit état comporte une comparaison de la valeur absolue de ladite au moins une différence de phase avec un seuil, le canal étant considéré comme linéaire et temporellement invariant si la valeur absolue de ladite au moins une différence de phase est inférieure ou égale audit seuil et comme linéaire et cyclo-stationnaire dans le cas contraire.

Du côté émission, le signal analogique de canal est issu d'une conversion numérique/analogique d'un signal numérique initial, et lorsque la fréquence d'échantillonnage du signal numérique (en réception) est différente de la fréquence d'échantillonnage du signal numérique initial (en émission), il est préférable de tenir compte de ce décalage de fréquence d'échantillonnage (« sampling frequency offset ») pour corriger les fonctions de transfert.

Ainsi selon un mode de mise en œuvre, ladite pluralité d'estimations de canal comprennent des estimations de fonctions de transfert de base respectivement effectuées à partir de ladite pluralité de symboles de référence de ladite trame reçue, et un traitement de correction de ces fonctions de transfert de base avec un déphasage correspondant à ce décalage de fréquence d'échantillonnage de façon à obtenir lesdites fonctions de transfert.

De façon à détecter plus facilement les variations temporelles du canal, il est préférable de choisir un ensemble de symboles de référence de la trame reçue qui s'étendent temporellement sur une durée totale égale ou légèrement supérieure à la période de cyclo-stationnarité éventuelle du canal, et de choisir les deux fonctions de transfert de chaque paire, à partir desquelles on détermine une différence de phase, de façon à ce qu'elles soient respectivement associées à deux symboles de référence temporellement espacés d'une durée supérieure à une durée limite correspondant à un nombre minimum de symboles de référence.

La durée totale des symboles de référence est légèrement supérieure à ladite période de cyclo-stationnarité lorsque celle-ci n'est pas un multiple entier de la durée d'un symbole de référence. Ainsi dans ce cas cette période est par exemple comprise entre deux multiples entiers consécutifs de la durée d'un symbole de référence.

Ainsi, à titre d'exemple, lorsque le signal est conforme à la norme PLC-G3, chaque trame reçue comporte un préambule suivi d'un en-tête (« header ») suivi d'un champ utile (« payload »). Les symboles de référence comportent alors avantageusement les symboles de l'en-tête et deux symboles du champ utile correspondant à deux symboles connus de la trame transmise.

Le nombre de symboles de référence est alors égal à 15 et s'étendent ensemble sur une durée égale à 10,42 ms (puisque chaque symbole de référence a une durée égale à 0,695 ms). Cette durée totale de 10,42 ms est légèrement supérieure à la période de cyclo-stationnarité éventuelle du canal (10 ms) qui est égale à la moitié de la période du courant alternatif destiné à circuler sur la ligne électrique (soit 20 ms pour une fréquence de 50 Hz)

De la même manière, dans les pays où la fréquence du secteur est 60 Hz, la période de cyclo-stationnarité du canal est égale à 8,33ms et le nombre de symboles de référence peut être pris égal à 12.

Le nombre limite de symboles de référence séparant les deux symboles de référence d'une paire est par exemple égal à 6, et le seuil permettant de détecter le caractère temporellement invariant ou cyclo-stationnaire dudit canal dépend de l'implémentation choisie et peut être par exemple égal à 0,75 radians.

De façon à améliorer encore la détection de l'état du canal, la phase de détection peut comprendre
une détermination de plusieurs différences de phase entre respectivement plusieurs paires de fonctions de transfert,
un traitement de moyennage des valeurs absolues de ces différences de phase de façon à obtenir une différence de phase moyenne, et
une comparaison de la différence de phase moyenne avec ledit seuil, le canal étant considéré comme linéaire et temporellement invariant si ladite différence de phase moyenne est inférieure ou égale audit seuil et comme linéaire et cyclo-stationnaire dans le cas contraire.

Les symboles de référence de la trame reçue à partir desquels vont être déterminées les différentes fonctions de transfert, sont par exemple des symboles de la trame reçue correspondant à des symboles connus de la trame transmise et/ou sont des symboles décodables sans connaître la fonction de transfert du canal de transmission.

Ainsi, dans le cas de la norme PLC-G3, comme indiqué ci-avant, les symboles de référence peuvent être les treize symboles de l'en-tête d'une trame, qui sont décodables sans connaître la fonction de transfert de canal de transmission puisqu'ils sont codés de façon différentielle, ainsi que les deux symboles du champ utile (« payload ») de la trame qui correspondent aux deux symboles connus S1, S2 du champ utile de la trame transmise.

On notera donc ici que bien que la norme PLC-G3 ne prévoie comme symboles pilotes pour l'estimation de la fonction de transfert du canal, que deux symboles connus, à savoir les symboles SI et S2, il est avantageusement prévu ici d'augmenter ce nombre de symboles pilotes en utilisant avantageusement les symboles de l'en-tête d'une trame qui sont décodables sans nécessiter de connaître la fonction de transfert du canal.

On peut alors aisément détecter les éventuelles variations temporelles du canal de transmission.

Cela étant il aurait été également possible d'utiliser également comme symboles de référence tout ou partie des symboles connus du préambule d'une trame afin d'améliorer l'estimation de canal ou augmenter le nombre d'estimations si la durée de l'en-tête et des symboles S1 et S2 est plus courte que la durée d'une demi-période du signal alternatif véhiculé par le canal (demi-période du secteur).

Selon un mode de mise en œuvre, chaque estimation de canal effectuée à partir d'un symbole décodable reçu (un symbole de l'en-tête par exemple) comprend un décodage du symbole reçu, un réencodage de ce symbole décodé de façon à obtenir un symbole réencodé et une détermination de la fonction de transfert du canal à partir du symbole réencodé et du symbole décodable reçu

Lorsque l'état du canal de transmission est détecté, plusieurs possibilités sont offertes.

Il est possible, dans certaines applications, que le récepteur ayant détecté un canal de transmission du type LPTV, ne soit pas adapté pour estimer correctement la fonction de transfert d'un tel canal et par conséquent d'effectuer le décodage des symboles sans trop de risque d'erreur, et décide par conséquent d'attendre que le canal redevienne éventuellement du type LTI pour effectuer le décodage des symboles de la trame correspondante de façon classique conformément au standard PLC-G3 en utilisant uniquement les symboles S1 et S2 de la trame pour effectuer l'estimation de canal puis le décodage.

Cela étant, selon un mode de mise en œuvre avantageux, lorsque le canal de transmission est considéré comme linéaire et cyclo-stationnaire pour toute la durée de ladite trame, il est possible d'effectuer une estimation de la fonction de transfert d'un tel canal cyclo-stationnaire suivie d'un décodage.

A cet égard, on peut alors prévoir une élaboration d'une séquence de N fonctions de transfert du canal de transmission respectivement associées à N tranches temporelles successives, la durée totale des N tranches temporelles étant égale à la quasi-totalité de la période de cyclo-stationnarité du canal (lorsque cette période de cyclo-stationnarité n'est pas un multiple entier de la durée d'une tranche temporelle ou d'un symbole) ou à la totalité de ladite période, puis un décodage de certains au moins des symboles d'une trame en utilisant pour chacun de ces symboles la fonction de transfert associée à la tranche temporelle contenant ledit symbole.

Une durée totale des N tranches temporelles égale à la quasi-totalité de la période de cyclo-stationnarité du canal signifie par exemple que ladite période de cyclo-stationnarité est comprise entre N fois et N+l fois la durée d'une tranche temporelle.

Pour élaborer ces N fonctions de transfert, on peut par exemple élaborer une séquence initiale de M fonctions de transfert respectivement associées à M symboles de référence successifs de chaque trame, les M symboles de référence couvrant temporellement une durée égale ou légèrement supérieure (lorsque cette période de cyclo-stationnarité n'est pas un multiple entier de la durée d'un symbole) à la totalité de ladite période de cyclo-stationnarité, les N fonctions de transfert étant issues de ces M fonctions de transfert.

Et, les M fonctions de transfert sont avantageusement celles obtenues lors de la phase de détection de l'état du canal de transmission.

Ainsi, dans le cas de la norme PLC-G3, M est par exemple égal à 15 puisqu'on utilise quinze symboles de référence pour élaborer quinze fonctions de transfert.

Alors qu'il serait possible d'utiliser quatorze de ces quinze fonctions de transfert pour le décodage des symboles du champ utile « payload ») de la trame, il s'avère préférable, pour obtenir un meilleur rapport signal sur bruit, d'utiliser seulement sept fonctions de transfert (N=7), ces N fonctions de transfert étant par exemple les moyennes deux à deux de quatorze fonctions de transfert successives de la séquence initiale des M fonctions de transfert.

Le décodage des symboles suivant le dernier symbole de référence utilise alors avantageusement successivement et cycliquement les fonctions de transfert de la séquence des N fonctions de transfert (N=7 par exemple).

Lorsque la durée des N tranches temporelles est différente de la période de cyclo-stationnarité c'est-à-dire lorsque cette période de cyclo-stationnarité n'est pas un multiple entier de la durée d'un symbole, le décodage de symboles suivant le dernier symbole de référence comprend également périodiquement un décalage de fonction de transfert dans l'utilisation successive et cyclique des fonctions de transfert. Ainsi, par exemple, on pourra à un moment donné et périodiquement, utiliser deux fois de suite la même fonction de transfert avant de reprendre le cycle normal des fonctions de transfert.

Lorsque le signal est véhiculé par courant porteur de ligne, la période de cyclo-stationnarité du canal est égale à la moitié de la période du signal alternatif (courant ou tension) destiné à circuler sur ladite ligne électrique. Dans une telle application, un signal de référence est délivré à chaque franchissement de « 0 » du signal alternatif (il s'agit d'un signal connu par l'homme du métier sous la dénomination de signal de « zero-crossing »). Dans ce cas, la valeur de la période de cyclo-stationnarité du canal peut être avantageusement recalée à partir des occurrences dudit signal de référence.

Lorsque le canal de transmission est considéré comme linéaire et temporellement invariant (LTI) pour toute la durée d'une trame, il est particulièrement avantageux d'effectuer un traitement de moyennage de la pluralité de fonctions de transfert du canal obtenues lors de la phase de détection (par exemple les quinze fonctions de transfert respectivement obtenues à partir des quinze symboles de référence (13 symboles de l'en-tête et les deux symboles correspondant aux deux symboles transmis connus SI et S2) de façon à obtenir une fonction de transfert moyenne. Et, dans ce cas, le décodage des symboles de la trame suivant lesdits symboles de référence est effectué en utilisant cette fonction de transfert moyenne.

Ceci permet d'augmenter significativement le rapport signal sur bruit de la fonction de transfert moyenne, ce qui *in fine,* va conduire à une augmentation de la performance de décodage de plusieurs dB.

Selon un autre aspect, il est proposé un récepteur, comprenant un étage d'entrée destiné à être connecté sur un canal de transmission et configuré pour délivrer un signal analogique de canal issu du canal de transmission, un étage de conversion analogique/numérique du signal analogique de canal pour délivrer un signal numérique et des moyens de traitement dudit signal numérique.

Selon une caractéristique générale de cet autre aspect, les moyens de traitement comprennent des moyens de détection configurés pour effectuer au moins une phase de détection de l'état du canal de transmission à partir dudit signal numérique de façon à détecter si le canal de transmission est considéré, sur un intervalle de temps, comme étant linéaire et temporellement invariant ou bien comme étant linéaire et cyclo-stationnaire.

Selon un mode de réalisation, le signal analogique de canal véhicule des trames de symboles et les moyens de détection sont configurés pour effectuer ladite phase de détection au cours de la réception d'au moins une trame, l'état détecté du canal étant considéré comme valable pour toute la durée de ladite au moins une trame.

Cela étant les moyens de détection peuvent être configurés pour effectuer ladite phase de détection au cours de la réception de chaque trame, l'état détecté du canal lors de la réception d'une trame courante étant considéré comme valable pour toute la durée de cette trame courante.

Selon un mode de réalisation, les moyens de détection comprennent
des moyens d'estimation configurés pour effectuer une pluralité d'estimations de canal respectivement à partir d'une pluralité de symboles de référence de ladite trame reçue de façon à obtenir une pluralité de fonctions de transfert dudit canal,
des moyens de calcul configurés pour déterminer au moins une différence de phase entre au moins une paire de fonctions de transfert, et
des moyens de comparaison configurés pour effectuer une comparaison de la valeur absolue de ladite au moins une différence de phase avec un seuil,
le canal étant considéré comme linéaire et temporellement invariant si la valeur absolue de ladite au moins une différence de phase inférieure ou égale audit seuil et comme linéaire et cyclo-stationnaire dans le cas contraire.

Selon un mode de réalisation, le signal analogique de canal est issu d'une conversion numérique/analogique d'un signal numérique initial, et lorsque la fréquence d'échantillonnage du signal numérique est différente de la fréquence d'échantillonnage du signal numérique initial, les moyens d'estimations sont en outre configurés pour effectuer des estimations de fonctions de transfert de base respectivement à partir de ladite pluralité de symboles de référence de ladite trame reçue, et un traitement de correction de ces fonctions de transfert de base avec un déphasage correspondant à ce décalage de fréquence d'échantillonnage de façon à délivrer lesdites fonctions de transfert.

Selon un mode de réalisation, l'ensemble des symboles de référence de la trame reçue s'étendent temporellement sur une durée totale égale ou légèrement supérieure à la période de cyclo-stationnarité éventuelle du canal et les deux fonctions de transfert de chaque paire sont respectivement associées à deux symboles de référence temporellement espacés d'une durée supérieure à une durée limite correspondant à un nombre minimum de symboles de référence.

Selon un mode de réalisation, les moyens de calcul sont configurés pour déterminer plusieurs différences de phases entre respectivement plusieurs paires de fonctions de transfert et pour déterminer la moyenne des valeurs absolues de ces différences de phases de façon à obtenir une différence de phase moyenne, et les moyens de comparaison sont configurés pour effectuer une comparaison de la différence de phase moyenne avec ledit seuil, le canal étant considéré comme linéaire et temporellement invariant si la ladite différence de phase moyenne est inférieure ou égale audit seuil et comme linéaire et cyclo-stationnaire dans le cas contraire.

Les symboles de référence de la trame reçue sont par exemple des symboles de la trame reçue correspondant à des symboles connus de la trame transmise et/ou sont des symboles décodables sans connaître la fonction de transfert du canal de transmission.

Les moyens d'estimation sont alors avantageusement configurés pour effectuer un décodage d'un symbole décodable reçu, un ré-encodage de ce symbole décodé de façon à obtenir un symbole ré-encodé et une détermination de la fonction de transfert associée à ce symbole décodable reçu, à partir dudit symbole ré-encodé et dudit symbole décodable reçu.

Selon un mode de réalisation, le signal est modulé selon une modulation OFDM.

Selon un mode de réalisation, le canal de transmission est une ligne électrique, le signal est destiné à être véhiculé par courant porteur de ligne et la période de cyclo-stationnarité éventuelle du canal est la moitié de la période du courant alternatif destiné à circuler sur ladite ligne électrique.

Selon un mode de réalisation, le signal est conforme à la norme PLC-G3.

Selon un mode de réalisation, chaque trame reçue comporte un préambule suivi d'un en-tête suivi d'un champ utile et lesdits symboles de référence comportent les symboles de l'entête et deux symboles du champ utile correspondant à deux symboles connus de la trame transmise.

Selon un mode de réalisation, ledit nombre limite de symboles de référence est égal à 6.

Selon un mode de réalisation, ledit seuil est égal à 0,75 radian.

Selon un mode de réalisation, lorsque le canal de transmission est considéré comme linéaire et cyclo-stationnaire pour toute la durée de ladite au moins une trame, les moyens de traitement comportent
des moyens d'élaboration configurés pour élaborer une séquence de N fonctions de transfert du canal de transmission respectivement associées à N tranches temporelles successives, la durée totale des N tranches temporelles étant égale à la quasi-totalité de la période de cyclo-stationnarité du canal et ou à la totalité de ladite période, et
des moyens de décodage configurés pour décoder certains au moins des symboles d'une trame en utilisant pour chacun de ces symboles la fonction de transfert associée à la tranche temporelle contenant ledit symbole.

Selon un mode de réalisation, les moyens d'élaboration sont configurés pour élaborer une séquence initiale de M fonctions de transfert respectivement associées à M symboles de référence successifs de chaque trame, les M symboles de référence couvrant temporellement une durée égale ou légèrement supérieure à la totalité de ladite période, et pour déterminer les N fonctions de transfert à partir de ces M fonctions de transfert.

Selon un mode de réalisation, les M fonctions de transfert sont celles délivrées par les moyens d'estimation incorporés dans les moyens de détection.

Selon un mode de réalisation, M est égal 15, N est égal à 7, et les moyens d'élaboration sont configurés pour effectuer les moyennes deux à deux de quatorze fonctions de transfert successives de ladite séquence initiale de façon à obtenir les N fonctions de transfert.

Selon un mode de réalisation, les moyens de décodage sont configurés pour utiliser successivement et cycliquement les fonctions de transfert de la séquence des N fonctions de transfert de façon à décoder les symboles suivant le dernier symbole de référence.

Selon un mode de réalisation, lorsque la durée totale des N tranches temporelles est différente de la période de cyclo-stationnarité, les moyens de décodage sont configurés pour effectuer périodiquement un décalage de fonction de transfert dans l'utilisation successive et cyclique des fonctions de transfert de façon à décoder les symboles suivant le dernier symbole de référence comprend également.

Selon un mode de réalisation, le signal est destiné à être véhiculé par courant porteur de ligne, la période de cyclo-stationnarité du canal est la moitié de la période du courant alternatif destiné à circuler sur ladite ligne électrique, l'étage d'entrée est configuré pour délivrer en outre un signal de référence à chaque franchissement de zéro dudit courant alternatif, et les moyens de traitement sont configurés pour recaler la valeur de la période de cyclo-stationnarité du canal à partir des occurrences dudit signal de référence.

Selon un mode de réalisation, lorsque le canal de transmission est considéré comme linéaire et temporellement invariant pour toute la durée de ladite au moins une trame, les moyens de traitement comportent un module moyenneur configuré pour effectuer un traitement de moyennage de la pluralité de fonctions de transfert dudit canal délivrées par les moyens de détection de façon à obtenir une fonction de transfert moyenne, et des moyens de décodage configurés pour décoder des symboles de la trame suivant lesdits symboles de référence en utilisant cette fonction de transfert moyenne.

D'autres avantages et caractéristiques de l'invention apparaîtront à l'examen de la description détaillée de modes de mise en œuvre et de réalisation, nullement limitatifs, et des dessins annexés sur lesquels :

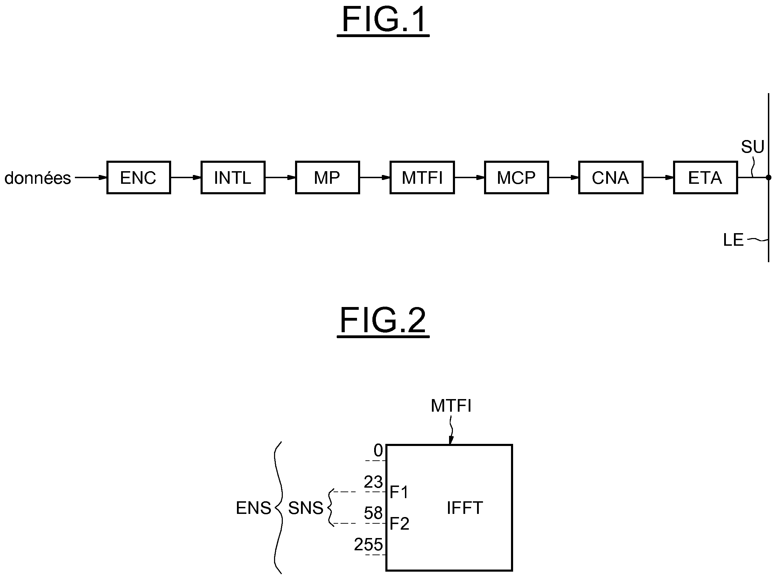

- les figures 1 à 15 illustrent schématiquement différents modes de mise en œuvre et de réalisation de l'invention.

Les modes de mise en œuvre et de réalisation qui vont maintenant être décrits le sont dans le cadre d'une transmission d'informations par courant porteur en ligne (CPL) conforme à la norme PLC-G3, bien que l'invention ne soit pas limitée à ce type d'application.

Dans tout ce qui suit, à chaque fois qu'on citera la norme PLC-G3, on supposera que l'on considère la bande de fréquences CENELEC A (3-95 kHz).

On se réfère maintenant à la figure 1 pour illustrer schématiquement un exemple d'émetteur capable de transmettre un signal utile SU sur une ligne électrique LE par courant porteur en ligne.

La chaîne de transmission comprend par exemple un encodeur ENC, par exemple un encodeur convolutionnel, recevant les données à transmettre de moyens de codage de source. Des moyens d'entrelacement INTL sont connectés à la sortie de l'encodeur et sont suivis par des moyens de « mappage » (mapping means) qui transforment les bits en symboles selon un schéma de transformation dépendant du type de modulation utilisée, par exemple une modulation de type BPSK ou plus généralement une modulation QAM.

Chaque symbole contient des coefficients de modulation associés à des porteuses qui vont être modulées en conséquence. Les symboles sont délivrés en entrée de moyens de traitement MTFI destinés à effectuer une opération de transformée de Fourier inverse rapide (IFFT).

On notera ici en se référant plus particulièrement à la figure 2, que les porteuses modulées forment un sous-ensemble SNS de porteuses parmi un ensemble ENS disponible de porteuses (ensemble qui correspond à la taille de la transformée de Fourier inverse).

Ainsi, dans la norme PLC-G3, la taille de la transformée de Fourier inverse est égale à 256 tandis que les porteuses modulées du sous-ensemble SNS sont comprises entre les rangs 23 et 58, ce qui correspond à une bande fréquentielle F1-F2 comprise entre 35,9375 et 90,625 KHz. La fréquence d'échantillonnage est ici égale à 400 KHz conduisant à un espacement entre les porteuses égal à 1,5625 KHz, ce qui rend ainsi les fréquences orthogonales (modulation OFDM).

Les coefficients de modulation associés aux porteuses non utilisées sont égaux à 0.

Le signal OFDM dans le domaine temporel est généré en sortie des moyens de traitement MTFI, et des moyens MCP rajoutent à chaque symbole OFDM dans le domaine temporel, un préfixe cyclique qui est une recopie en tête du symbole OFDM d'un certain nombre d'échantillons situés à la fin de ce symbole.

A titre d'exemple, dans la norme PLC-G3, la longueur du préfixe cyclique est de 30 échantillons pour une fréquence d'échantillonnage de 400 KHz.

Le signal est ensuite converti dans un convertisseur numérique/analogique CNA puis traité dans un étage ETA, communément désigné par l'homme du métier sous le vocable « Analog Front End », où il subit notamment une amplification de puissance, avant d'être transmis sur la ligne électrique LE.

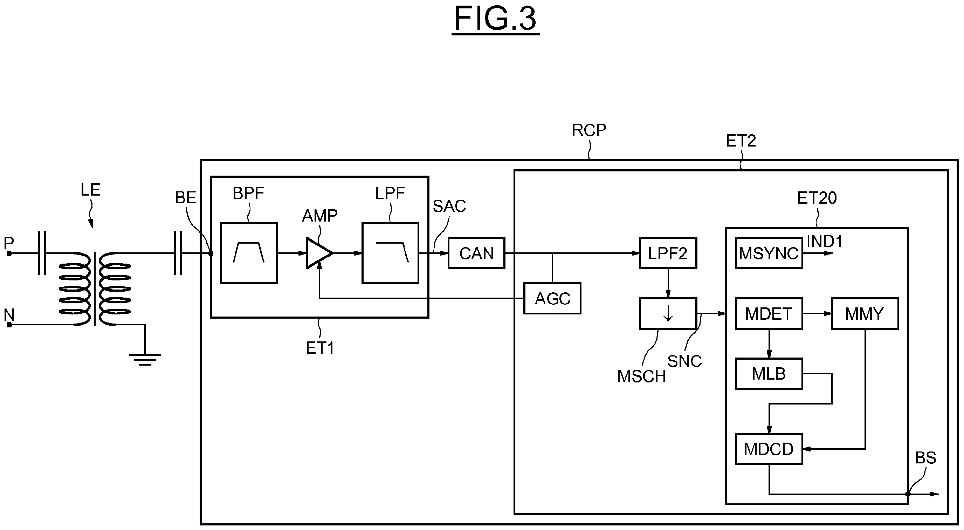

En réception, on voit, en se référant plus particulièrement à la figure 3, que le récepteur RCP comporte ici un étage d'entrée analogique ET1 dont la borne d'entrée BE est connectée sur la ligne électrique LE.

Cet étage d'entrée analogique ET1 comporte de façon classique un filtre passe bande BPF, un filtre passe bas LPF, ainsi que des moyens d'amplification AMP. La sortie de l'étage ET1 est connectée à un étage de conversion analogique/numérique CAN dont la sortie est connectée à l'entrée de moyens ou étage de traitement ET2.

L'étage de traitement ET2 comporte ici des moyens de contrôle automatiques de gain AGC permettant de contrôler la valeur du gain des moyens d'amplification AMP de l'étage ET1.

Le signal SAC délivré en sortie de l'étage analogique ET1 et en entrée de l'étage de conversion analogique/numérique CAN désigne un signal analogique de canal issu du canal de transmission (ligne électrique) LE.

L'étage de traitement ET2 comporte également un filtre passe bas LPF2 suivi, bien que cela ne soit pas indispensable, de moyens de sous-échantillonnage MSCH. La fréquence d'échantillonnage du signal en amont des moyens MSCH est notée Fs tandis que la fréquence d'échantillonnage du signal en sortie des moyens MSCH est notée Fss.

Le signal SNC en sortie des moyens MSCH désigne alors ici un signal numérique de canal qui est issu de la conversion analogique/numérique du signal analogique de canal SAC et sur lequel vont être appliqués notamment un traitement de synchronisation, des estimations de canal et des décodages de symboles comme on va le voir plus en détail ci-après.

Les estimations de canal sont effectuées une fois la synchronisation acquise.

La fréquence Fc désigne la fréquence de calcul à laquelle vont être effectués les différents traitements.

Dans la norme PLC-G3 par exemple, la fréquence d'échantillonnage Fs spécifiée est de 400 KHz pour une taille de FFT de 256.

Bien qu'il eût été possible d'effectuer toutes les opérations de ces différents traitements à une fréquence de calcul Fc égale à la fréquence d'échantillonnage Fs de 400 KHz, le fait de sous-échantillonner le signal à une fréquence Fss inférieure à Fs et d'effectuer toutes les opérations à la fréquence de calcul Fc égale à Fss permet de réduire la complexité d'implémentation de l'étage de traitement et permet également d'effectuer un traitement de transformée de Fourier rapide directe (FFT) ayant une taille réduite par rapport à la taille spécifiée de 256.

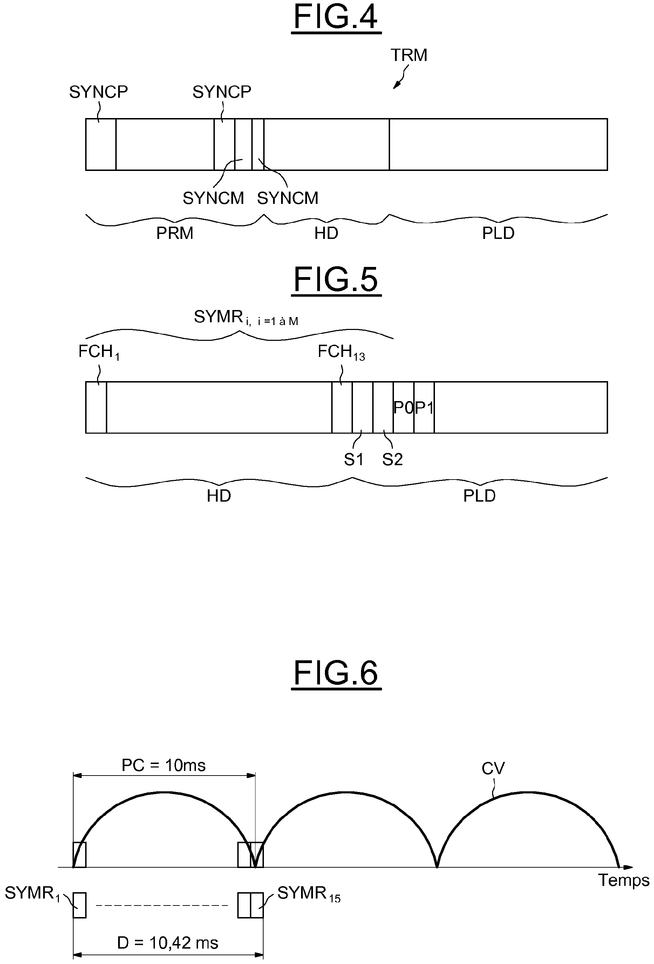

Avant de revenir plus en détail sur les différents moyens qui sont incorporés dans l'étage de traitement ET2, on se réfère maintenant plus particulièrement à la figure 4 pour illustrer la structure d'une trame véhiculant des symboles, par exemple dans le cadre de la norme PLC-G3.

La trame reçue TRM comprend un préambule PRM comportant ici huit symboles connus SYNCP suivis d'un symbole de phase opposée SYNCM lui-même suivi d'un demi-symbole SYNCM.

La trame TRM comporte ensuite un en-tête (header) HD suivi d'un champ utile PLD contenant des symboles de données utiles à décoder et plus connu par l'homme du métier sous la dénomination anglosaxonne de « payload ».

Les symboles de l'en-tête HD contiennent notamment des informations de contrôle pour le décodage des données du champ PLD ainsi que le nombre d'octets à décoder dans le champ PLD.

Le préambule PRM de la trame TRM permet au récepteur de se synchroniser c'est-à-dire d'obtenir une indication IND1 permettant de retrouver la structure de la trame afin de pouvoir repérer le début de l'en-tête HD.

Si l'on se réfère maintenant de nouveau à la figure 3, on voit que l'étage de traitement ET2 comporte un sous-étage ET20 incorporant différents moyens que l'on va maintenant décrire de façon fonctionnelle. Ces différents moyens peuvent être réalisés de façon logicielle au sein d'un microprocesseur par exemple, formant alors au moins en partie le sous-étage ET20.

Parmi ces différents moyens, on trouve de façon classique, des moyens de synchronisation MSYNC permettant au récepteur de se synchroniser c'est-à-dire d'obtenir ladite indication IND1 permettant de retrouver la structure de la trame afin de pouvoir repérer le début de l'en-tête HD.

Ces moyens de synchronisation peuvent être de structure classique et connue en soi ou bien, en variante, ceux incorporant les moyens de filtrage décrits dans la demande de brevet français n°1552588.

Parmi les autres moyens incorporés dans le sous-étage 20, on trouve des moyens de détection MDET configurés pour effectuer une détection de l'état du canal de transmission à partir du signal numérique SNC de façon à détecter si le canal de transmission est considéré comme étant linéaire et temporellement invariant ou bien comme étant linéaire et cyclo-stationnaire.

Lorsque le canal de transmission est considéré comme linéaire et cyclo-stationnaire pour toute la durée d'une trame par exemple, les moyens de traitement comportent également des moyens d'élaboration MLB configurés pour élaborer, comme on le verra plus en détail ci-après, une séquence de plusieurs fonctions de transfert du canal de transmission respectivement associées à N tranches temporelles successives.

Des moyens de décodage MDCD de structure classique et connue en soi, sont alors configurés pour décoder certains au moins des symboles d'une trame, notamment les symboles du champ utile PLD de la trame, en utilisant pour chacun de ces symboles la fonction de transfert associée à la tranche temporelle contenant ledit symbole.

Là encore, on reviendra plus en détail ci-après sur ce décodage.

Par contre, lorsque le canal de transmission est considéré comme linéaire et temporellement invariant pour toute la durée d'une trame, les moyens de traitement comportent avantageusement un module moyenneur MMY configuré pour effectuer un traitement de moyennage de la pluralité de fonctions de transfert du canal délivrées par les moyens de détection MDET de façon à obtenir une fonction de transfert moyenne.

Les moyens de décodage décodent alors les symboles du champ utile PLD de la trame en utilisant avantageusement cette fonction de transfert moyenne.

Là encore, on reviendra plus en détail ci-après sur cette fonctionnalité.

Si l'on se réfère maintenant plus particulièrement à la figure 5, on voit que l'en-tête HD de la trame reçue TRM comporte treize symboles FCH₁-FCH₁₃ qui ont été codés à l'émission de façon différentielle et qui sont chacun référencés par rapport au symbole précédent.

La trame TRM comporte par ailleurs au début du champ utile PLD, deux symboles correspondant à deux symboles transmis connus S1, S2. Cela étant à des fins de simplification on désignera également par S1 et S2 ces deux symboles reçus.

Les treize symboles FCH; et les deux symboles S1 et S2 forment ici M symboles de référence SYMR; (M est égal à 15 dans cet exemple).

Ces symboles de référence vont être utilisés pour détecter l'état du canal de transmission.

Le canal de transmission est un canal linéaire c'est-à-dire qu'il se comporte comme un filtre linéaire.

Cela étant, le canal peut être considéré comme temporellement invariant (LTI) ou cyclo-stationnaire (LPTV).

L'état temporellement invariant (LTI) ou cyclo-stationnaire (LPTV) du canal peut varier d'une trame à l'autre mais cet état est considéré comme inchangé au cours d'une trame.

Lorsque le canal de transmission devient cyclo-stationnaire lors de la réception d'une ou de plusieurs trames, en raison par exemple d'un branchement de lampe halogène ou d'objet comportant des redresseurs de tension, sur la ligne électrique, le canal est périodique en amplitude et en phase de façon synchronisée avec le courant ou la tension alternatifs présents sur la ligne électrique.

En d'autres termes, pour un canal cyclo-stationnaire, les caractéristiques de sa fonction de transfert varient au cours de la période de cyclo-stationnarité du canal mais se répètent ensuite périodiquement.

Sur la figure 6, on a représenté schématiquement par la courbe CV, les variations périodiques du canal et, sur cette figure, la référence PC désigne la période de cyclo-stationnarité du canal qui est égale à la moitié de la période du courant ou de la tension alternatifs présents sur la ligne.

Ainsi, pour un courant et une tension alternatifs à 50 Hz, la période de cyclo-stationnarité PC du canal est égale à 10 ms.

Par ailleurs, chaque symbole de référence SYMR; a dans la norme PLC-G3, une durée égale à 0,695 ms.

De ce fait, l'ensemble des 15 symboles de référence SYMR₁-SYMR₁₅ s'étendent temporellement sur une durée totale égale à 10,42 ms qui est donc ici légèrement supérieure à la période de cyclo-stationnarité PC.

En d'autres termes, dans le cas présent, la période de cyclo-stationnarité PC n'est pas un multiple entier de la durée d'un symbole de référence.

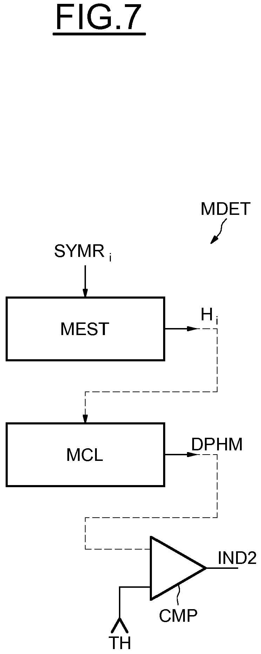

On va maintenant décrire plus en détail la phase de détection de l'état du canal en se référant plus particulièrement aux figures 7 à 10. Cette phase de détection est effectuée une fois la synchronisation du récepteur acquise.

Cette phase de détection est effectuée ici à chaque réception de trame et l'on va maintenant décrire les traitements effectués au cours de l'une de ces trames.

Comme illustré sur la figure 7, la phase de détection, effectuée par les moyens de détection MDET comprend une pluralité d'estimations de canal respectivement effectuées par les moyens d'estimation MEST à partir des symboles de référence SYMR; de façon à obtenir une pluralité de fonctions de transfert du canal Hᵢ.

Des moyens de calcul MCL vont alors déterminer, à partir de ces fonctions de transfert Hᵢ, une différence de phase moyenne DPHM qui va être comparée dans des moyens de comparaison CMP avec un seuil TH.

Le résultat de cette comparaison fournit une indication IND2 représentative de l'état LTI ou LPTV du canal.

Plus précisément, si la différence de phase moyenne DPHM est inférieure au seuil TH, alors le canal est considéré comme étant du type LTI au cours de la trame considérée, tandis que si la différence de phase moyenne DPHM est supérieure au seuil TH, le canal est considéré comme cyclo-stationnaire (LPTV) au cours de cette trame.

Dans le cas d'un récepteur conforme PLC-G3, le seuil TH pourra par exemple être de l'ordre de 0,75 radians.

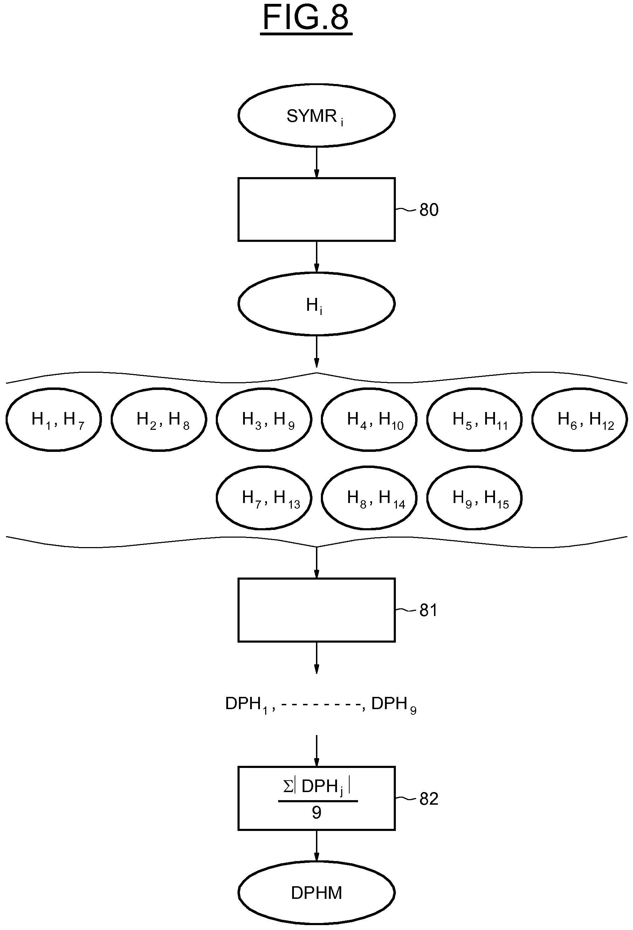

On se réfère maintenant plus particulièrement à la figure 8 pour illustrer un mode de mise en œuvre préférentiel permettant d'obtenir la différence de phase moyenne DPHM qui est destinée à être comparée au seuil TH.

Dans l'étape 80, on estime la fonction de transfert Hᵢ du canal à partir du symbole de référence SYMRᵢ.

Plus précisément, cette fonction de transfert Hᵢ est égale au produit du symbole de référence reçu SYMRᵢ par le conjugué complexe du symbole correspondant transmis par l'émetteur sur le canal de transmission. Dans le cas présent, conforme à la norme PLC-G3, cette fonction de transfert H; est en fait un vecteur complexe ayant 36 composantes complexes correspondant respectivement aux 36 tons du symbole.

A l'issue de l'étape 80, on obtient donc 15 fonctions de transfert H₁-H₁₅ correspondant respectivement aux 15 symboles de référence SYMR₁-SYMR₁₅.

Il serait alors possible de ne déterminer à ce stade qu'une seule différence de phase entre deux de ces fonctions de transfert.

Cependant, il est préférable de déterminer une telle différence de phase entre deux fonctions de transfert espacées temporellement d'un nombre minimum de symboles de référence, par exemple 6 symboles de référence, et ce de façon à mieux déterminer cette différence de phase.

Cela étant, il est encore plus avantageux de déterminer plusieurs différences de phase à partir de plusieurs paires différentes de fonctions de transfert et d'en faire la moyenne pour obtenir la différence de phase moyenne DPHM.

Ceci va maintenant être décrit plus en détail.

L'étape 81 détermine la différence de phase entre deux fonctions de transfert Hᵢ et Hₖ tout simplement en effectuant le produit Hᵢ par le conjugué complexe de Hₖ.

Puisque l'on a choisi un nombre minimum de symboles égal à 6, on peut former 9 doublets H₁, H₇ ; H₂, H₈ ; H₃, H₉ ; H₄, H₁₀ ; H₅, H₁₁ ; H₆, H₁₂ ; H₇, H₁₃ ; H₈, H₁₄ et H₉, H₁₅.

Bien entendu, il serait tout à fait possible de ne pas utiliser ces neuf doublets pour obtenir neuf différences de phase.

On suppose néanmoins dans ce mode de mise en œuvre, que l'on utilise les neuf doublets de façon à obtenir neuf différences de phase DPH₁-DPH₉.

Dans l'étape 82, on effectue la moyenne des valeurs absolues de ces différences de phase de façon à obtenir la différence de phase moyenne DPHM.

Dans le mode de mise en œuvre qui vient d'être décrit, on a supposé que la fréquence d'échantillonnage côté émission était identique à la fréquence d'échantillonnage du signal numérique de canal SNC.

Cela étant, comme indiqué ci-avant, la fréquence d'échantillonnage du signal numérique SNC peut être différente du signal numérique initial élaboré dans l'émetteur.

Dans ce cas, il résulte un décalage de fréquence d'échantillonnage connu par l'homme du métier sous l'expression anglosaxonne « sampling frequency offset » qu'il faut prendre en compte dans l'estimation des fonctions de transfert Hᵢ.

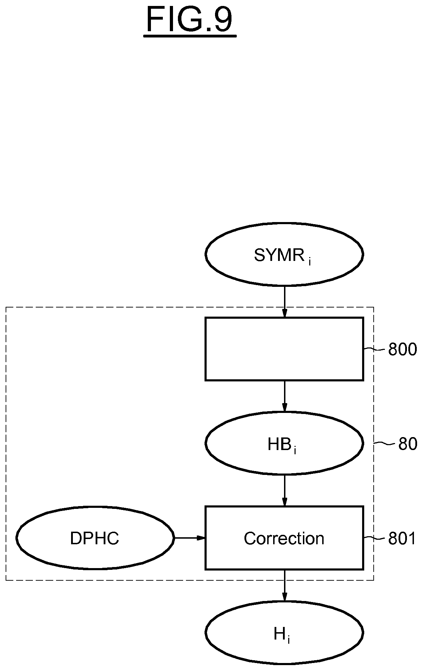

Ceci est illustré schématiquement sur la figure 9.

Plus précisément, on détermine, dans l'étape 800, d'une façon analogue à ce qui a été décrit dans l'étape 80 de la figure 8, des fonctions de transfert de base HBᵢ respectivement associées au symbole de référence SYMRᵢ.

Puis, on estime le décalage de fréquence (« sampling frequency offset ») en utilisant par exemple deux fonctions de transfert de base relativement temporellement éloignées, par exemple les fonctions de transfert HB₁ et HB₁₃.

Le déphasage qui en résulte est alors obtenu en effectuant le produit de la fonction de transfert HB₁ par le conjugué complexe de la fonction de transfert HB₁₃, le tout divisé par le nombre de symboles.

On obtient alors une correction de déphasage DPHC qui est appliquée dans une étape 801 pour corriger les fonctions de transfert HBᵢ et obtenir les fonctions de transfert Hᵢ.

L'estimation d'une fonction de transfert à partir de chacun des symboles S1 et S2 peut s'effectuer sans difficulté puisque les symboles transmis correspondant aux symboles S1 et S2 reçus sont connus.

Par contre, ce n'est pas le cas pour les symboles de référence de l'en-tête c'est-à-dire les symboles FCHᵢ.

Néanmoins, comme indiqué ci-avant, ces symboles FCHᵢ ont été codés à l'émission de façon différentielle et particulièrement robuste. Leur décodage ne nécessite donc pas la connaissance de la fonction de transfert du canal.

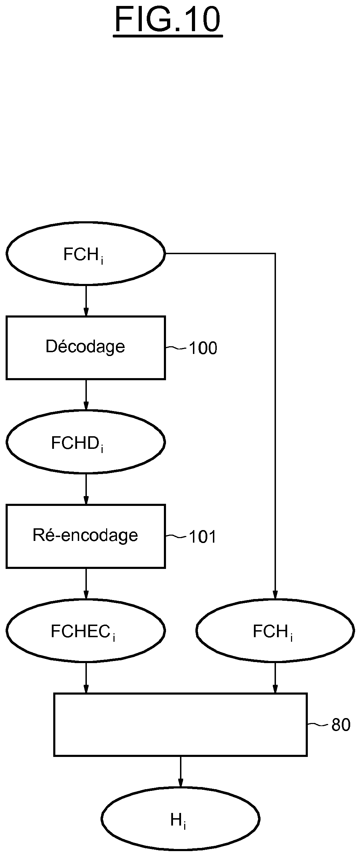

La figure 10 illustre un exemple d'estimation d'une fonction de transfert Hᵢ du canal à partir du symbole FCHᵢ de l'en-tête reçu.

On procède tout d'abord au décodage (étape 100) du symbole reçu FCHᵢ.

A cet égard, les moyens de décodage comportent classiquement des moyens configurés pour retirer de chaque symbole le préfixe cyclique, suivis de moyens configurés pour effectuer la transformée de Fourier rapide directe FFT.

Les moyens de décodage comportent également des moyens de démappage (demapping means) fournissant pour chaque porteuse une valeur du coefficient de modulation correspondant (bin). Ces moyens de démappage sont suivis d'un module configuré pour déterminer pour chaque coefficient de modulation une indication de confiance (décision douce : « soft decision ») de ladite valeur. Ce module est classique et connu en soi et utilise par exemple un algorithme du type LogMAP.

Les moyens de décodage comportent également des moyens de désentrelacement suivis d'un décodeur, par exemple un décodeur de type Viterbi, suivi de moyens aptes à effectuer un contrôle de parité. La sortie de ces moyens est connectée à la borne de sortie BS du sous-étage ET20 qui est connectée aux moyens formant la couche MAC du récepteur.

Puisque les différents symboles FCHᵢ sont référencés par rapport aux symboles précédents dans la trame, il est nécessaire de décoder tous les symboles FCHᵢ de l'en-tête avec les moyens de décodage mentionnés ci-avant. Puis, après vérification que le contrôle de parité est correct, on peut obtenir les différents symboles décodés FCHDᵢ.

On effectue alors dans l'étape 101 un réencodage de chacun de ces symboles FCHDᵢ en utilisant un encodeur convolutionnel, un entrelaceur et un moyen de mappage analogues aux moyens correspondants ENC, INTL, MP illustrés sur la figure 1 pour la partie émetteur.

On notera à cet égard que l'on reste dans le domaine fréquentiel.

On obtient alors des symboles réencodés FCHECᵢ correspondant aux symboles transmis.

On peut alors, dans l'étape 80 analogue à l'étape 80 de la figure 8, obtenir les fonctions de transfert Hᵢ associées aux différents symboles FCHᵢ à partir de ces symboles reçus FCHᵢ et des symboles réencodés FCHECᵢ.

A ce stade, l'état du canal a été détecté.

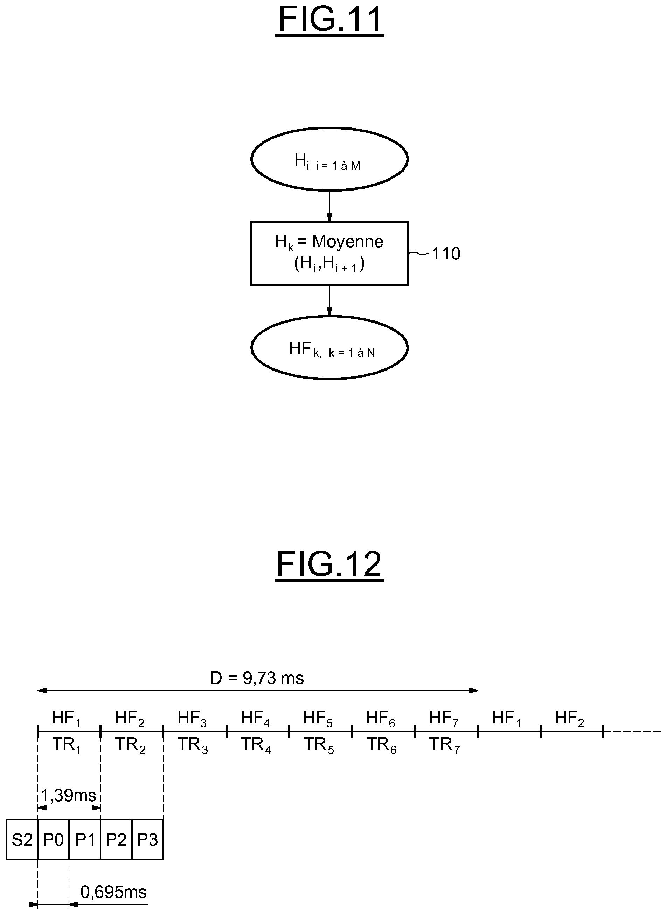

On se réfère maintenant plus particulièrement aux figures 11 à 14 pour illustrer la suite des traitements dans le cas où le canal a été détecté comme étant, pour la trame considérée, cyclo-stationnaire.

Dans un premier temps, on va estimer les fonctions de transfert du canal de transmission respectivement associées à différentes tranches temporelles successives, la durée totale de ces tranches temporelles étant égale à la quasi-totalité de la période de cyclo-stationnarité PC du canal (lorsque la période de cyclo-stationnarité n'est pas un multiple entier de la durée d'un symbole mais est comprise entre deux multiples entiers consécutifs de la durée du symbole) ou à la totalité de cette période (lorsque la période de cyclo-stationnarité est un multiple entier de la durée d'un symbole).

A cet égard, on va avantageusement réutiliser les M fonctions de transfert Hᵢ déterminées lors de la phase de détection de l'état du canal (figure 11).

Alors qu'il serait possible d'utiliser directement quatorze de ces fonctions de transfert Hᵢ pour le décodage ultérieur des symboles P0, P1, ... du champ utile PLD de la trame, il est préférable, de façon à améliorer le rapport signal sur bruit, de réduire ce nombre de fonctions de transfert.

Ainsi, comme illustré sur la figure 11, à partir des M fonctions de transferts Hᵢ (M=15) on va obtenir, en effectuant une moyenne deux à deux de certaines des fonctions de transfert Hᵢ (étape 110), N (N=7 par exemple) fonctions de transfert HFₖ, k variant de 1 à N, respectivement associées à sept tranches temporelles TR₁-TR₇ (figure 12).

La durée de chaque tranche temporelle est égale à la durée de deux symboles P du champ utile PLD, soit 1,39 ms.

De ce fait, la durée totale D de toutes les tranches temporelles TR₁-TR₇ est égale à 9,73 ms, ce qui est légèrement inférieur à la période de cyclo-stationnarité PC (10 ms).

Dans l'étape 110, pour obtenir les sept fonctions de transfert HFₖ, on choisit quatorze fonctions de transfert Hᵢ parmi les quinze fonctions de transfert obtenues lors de la phase de détection.

On choisira par exemple les fonctions de transfert H₂-H₁₅.

Et, dans ce cas, la fonction de transfert HF₁ est égale à la moyenne des fonctions de transfert H₂ et H₃.

La fonction de transfert HF₂ est égale à la moyenne des fonctions de transfert H₃ et H₄, et ainsi de suite jusqu'à obtenir la fonction de transfert HF₇ qui est égale à la moyenne des fonctions de transfert H₁₄ et H₁₅.

Comme illustré sur la figure 12, on va utiliser pour décoder les symboles P0, P1, P2... qui suivent le dernier symbole de référence S2, la fonction de transfert HFₖ qui est associée à la tranche temporelle TRₖ contenant le symbole à décoder. La fonction de transfert utilisée est prise en compte, comme il est connu par l'homme du métier, au niveau du moyen de démappage incorporé dans les moyens de décodage.

Et, on va utiliser successivement et cycliquement les fonctions de transfert de la séquence des N fonctions de transfert HF₁-HF₇.

En d'autres termes, une fois que l'on a utilisé le cycle complet des sept fonctions de transfert HF₁-HF₇, on recommence le cycle par l'utilisation de la fonction de transfert HF₁ jusqu'à HF₇ et ainsi de suite.

Cela étant, lorsque la durée D des N tranches temporelles est différente de la période de cyclo-stationnarité, il va y avoir progressivement un décalage temporel entre le cycle des fonctions de transfert HF₁-HF₇ et la période de cyclo-stationnarité du canal.

En d'autres termes, à un moment donné, il va y avoir un écart temporel égal à une tranche temporelle entre le cycle des fonctions de transfert et le cycle de variation du canal.

Il convient alors d'effectuer un décalage de fonction de transfert dans cette utilisation successive et cyclique des fonctions de transfert.

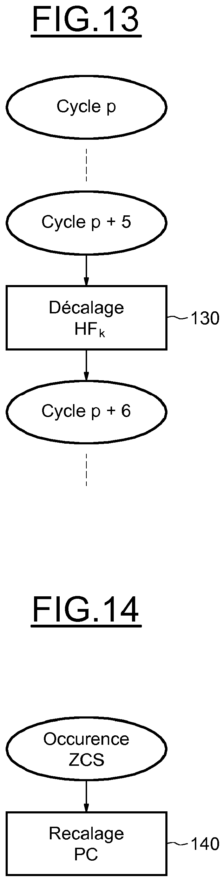

Ceci est illustré schématiquement sur la figure 13.

Dans le cas présent, avec une durée D égale à 9,73 ms et une période de cyclo-stationnarité de 10 ms, on procède à ce décalage au bout de cinq cycles de fonction de transfert et pour l'exécution du sixième cycle, on va réutiliser une deuxième fois la fonction de transfert HF₇ au lieu d'utiliser directement la fonction de transfert HF₁.

Bien entendu, après avoir utilisé une deuxième fois la fonction de transfert HF₇, on reprend le cycle des fonctions de transfert HF₁-HF₇.

Il peut également arriver que la valeur de la période de cyclo-stationnarité qui est directement liée à la période du signal alternatif circulant sur la ligne électrique, se décale temporellement en raison d'un décalage temporel de la période du signal électrique alternatif sur la ligne. Ceci peut être corrigé au moyen d'un signal de référence ZCS (figure 14) qui est délivré à chaque franchissement de « 0 » du courant ou de la tension alternatif.

Et, dans ce cas, la valeur de la période de cyclo-stationnarité du canal peut être recalée (étape 140) à partir des occurrences du signal de référence ZCS.

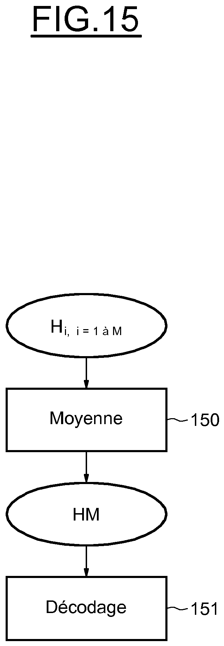

On se réfère maintenant plus particulièrement à la figure 15 pour illustrer un mode avantageux de mise en œuvre utilisable lorsque le canal de transmission a été détecté comme étant temporellement invariant (canal LTI).

Plus précisément, au lieu d'utiliser simplement les symboles S1 et S2 d'une trame pour estimer la fonction de transfert du canal, on peut avantageusement utiliser les M (M=15) fonctions de transfert Hᵢ associées aux 15 symboles de référence et ayant été déterminées lors de la phase de détection, pour en faire une moyenne (étape 150) de façon à obtenir une fonction de transfert moyenne qui va alors être utilisée pour le décodage (étape 151) des symboles du champ utile PLD de la trame.

Ceci permet d'augmenter de façon significative le rapport signal sur bruit de la fonction de transfert HM, ce qui se traduit *in fine* par une amélioration de plusieurs dB des performances de décodage.

## Revendications

1. Procédé de traitement d'un signal analogique de canal issu d'un canal de transmission, comprenant au moins une phase de détection de l'état du canal de transmission à partir d'un signal numérique de canal (SNC) issu d'une conversion analogique/numérique du signal analogique de canal de façon à détecter si le canal de transmission est considéré, sur un intervalle de temps, comme étant linéaire et temporellement invariant ou bien comme étant linéaire et cyclo-stationnaire,
**caractérisé en ce que** le signal analogique de canal (SAC) véhicule des trames (TRM) de symboles et ladite phase de détection est effectuée au cours de la réception d'au moins une trame, l'état détecté du canal étant considéré comme valable pour toute la durée de ladite au moins une trame.
et **en ce que** ladite phase de détection comprend une pluralité d'estimations de canal (80) respectivement effectuées à partir d'une pluralité de symboles de référence (SYMRᵢ) de ladite trame reçue de façon à obtenir une pluralité de fonctions de transfert (Hᵢ) dudit canal, une détermination (81, 82) d'au moins une différence de phase entre au moins une paire de fonctions de transfert, et la détection dudit état comporte une comparaison de la valeur absolue de ladite au moins une différence de phase avec un seuil (TH), le canal étant considéré comme linéaire et temporellement invariant si la valeur absolue de ladite au moins une différence de phase est inférieure ou égale audit seuil et comme linéaire et cyclo-stationnaire dans le cas contraire.

2. Procédé selon la revendication 1, dans lequel la phase de détection est effectuée au cours de la réception de chaque trame (TRM), l'état détecté du canal lors de la réception d'une trame courante étant considéré comme valable pour toute la durée de cette trame courante.

3. Procédé selon l'une des revendications 1 ou 2, dans lequel le signal analogique de canal est issu d'une conversion numérique/analogique d'un signal numérique initial, et lorsque la fréquence d'échantillonnage du signal numérique est différente de la fréquence d'échantillonnage du signal numérique initial, ladite pluralité d'estimations de canal comprennent des estimations (800) de fonctions de transfert de base (HBᵢ) respectivement effectuées à partir de ladite pluralité de symboles de référence de ladite trame reçue, et un traitement (801) de correction de ces fonctions de transfert de base avec un déphasage (DPHC) correspondant à ce décalage de fréquence d'échantillonnage de façon à obtenir lesdites fonctions de transfert (Hᵢ).

4. Procédé selon l'une des revendications 1 à 3, dans lequel l'ensemble des symboles de référence de la trame reçue s'étendent temporellement sur une durée totale égale ou légèrement supérieure à la période de cyclo-stationnarité éventuelle (PC) du canal et les deux fonctions de transfert de chaque paire sont respectivement associées à deux symboles de référence temporellement espacés d'une durée supérieure à une durée limite correspondant à un nombre minimum de symboles de référence.

5. Procédé selon l'une des revendications 1 à 4, dans lequel la phase de détection comprend une détermination (81) de plusieurs différences de phases (DPH₁-DPH₉) entre respectivement plusieurs paires de fonctions de transfert, un traitement de moyennage (82) des valeurs absolues de ces différences de phases de façon à obtenir une différence de phase moyenne (DPHM), et une comparaison de la différence de phase moyenne avec ledit seuil (TH), le canal étant considéré comme linéaire et temporellement invariant si la ladite différence de phase moyenne est inférieure ou égale audit seuil et comme linéaire et cyclo-stationnaire dans le cas contraire.

6. Procédé selon l'une des revendications 1 à 5, dans lequel les symboles de référence de la trame reçue correspondent à des symboles connus (S1, S2) de la trame transmise et/ou sont des symboles (FCHᵢ) décodables sans connaître la fonction de transfert du canal de transmission.

7. Procédé selon la revendication 6, dans lequel chaque estimation de canal effectuée à partir d'un symbole décodable reçu (FCHᵢ) comprend un décodage (100) du symbole reçu, un ré-encodage (101) de ce symbole décodé de façon à obtenir un symbole ré-encodé (FCHECᵢ) et une détermination de la fonction de transfert du canal à partir dudit symbole ré-encodé et dudit symbole décodable reçu.

8. Procédé selon l'une des revendications précédentes, dans lequel le signal analogique de canal est modulé selon une modulation OFDM.

9. Procédé selon l'une des revendications précédentes, dans lequel le canal de transmission est une ligne électrique, le signal analogique de canal est véhiculé par courant porteur de ligne et la période de cyclo-stationnarité éventuelle (PC) du canal est la moitié de la période du courant alternatif destiné à circuler sur ladite ligne électrique.

10. Procédé selon la revendication 9, dans lequel le signal analogique de canal est conforme à la norme PLC-G3.

11. Procédé selon les revendications 6 et 10, dans lequel chaque trame reçue comporte un préambule (PRM) suivi d'un en-tête (HD) suivi d'un champ utile (PLD) et lesdits symboles de référence comportent les symboles (FCHi) de l'entête et deux symboles (S1, S2) du champ utile correspondant à deux symboles connus de la trame transmise.

12. Procédé selon la revendication 4 et l'une des revendications 10 ou 11, dans lequel ledit nombre limite de symboles de référence est égal à 6.

13. Procédé selon la revendication 1 ou 5 et l'une des revendications 10 à 12, dans lequel ledit seuil (TH) est égal à 0,75 radian.

14. Procédé selon l'une des revendications précédentes, comprenant en outre, lorsque le canal de transmission est considéré comme linéaire et cyclo-stationnaire pour toute la durée de ladite au moins une trame, une élaboration (100) d'une séquence de N fonctions de transfert (Hᵢ) du canal de transmission respectivement associées à N tranches temporelles successives, la durée totale des N tranches temporelles étant égale à la quasi-totalité de la période de cyclo-stationnarité (PC) du canal ou à la totalité de ladite période (PC), et un décodage de certains au moins des symboles d'une trame en utilisant pour chacun de ces symboles la fonction de transfert associée à la tranche temporelle contenant ledit symbole.

15. Procédé selon la revendication 14, dans lequel l'élaboration de la séquence des N fonctions de transfert comprend une élaboration d'une séquence initiale de M fonctions de transfert (Hᵢ) respectivement associées à M symboles de référence successifs de chaque trame, les M symboles de référence couvrant temporellement une durée égale ou légèrement supérieure à la totalité de ladite période, les N fonctions de transfert (Hₖ) étant issues de ces M fonctions de transfert (Hi).

16. Procédé selon la revendication 15, dans lequel les M fonctions de transfert (Hᵢ) sont celles obtenues lors de la phase de détection de l'état du canal de transmission.

17. Procédé selon les revendications 11 et 16, dans lequel M est égal à 15, N est égal à 7, les N fonctions de transfert (Hₖ) étant les moyennes deux à deux de quatorze fonctions de transfert successives (H₂-H₁₅) de ladite séquence initiale.

18. Procédé selon l'une des revendications 15 à 17, dans lequel le décodage des symboles suivant le dernier symbole de référence utilise successivement et cycliquement les fonctions de transfert de la séquence des N fonctions de transfert (Hᵢ).

19. Procédé selon la revendication 18, dans lequel lorsque la durée des N tranches temporelles est différente de la période de cyclo-stationnarité (PC), le décodage des symboles suivant le dernier symbole de référence comprend également périodiquement un décalage (130) de fonction de transfert dans l'utilisation successive et cyclique des fonctions de transfert.

20. Procédé selon la revendication 18 ou 19, dans lequel le signal est véhiculé par courant porteur de ligne, la période de cyclo-stationnarité du canal est la moitié de la période du courant alternatif destiné à circuler sur ladite ligne électrique, dans lequel un signal de référence (ZCS) est délivré à chaque franchissement de zéro dudit courant alternatif, et la valeur de la période de cyclo-stationnarité du canal est recalée à partir des occurrences dudit signal de référence.

21. Procédé selon l'une des revendications 1 à 13, comprenant en outre, lorsque le canal de transmission est considéré comme linéaire et temporellement invariant pour toute la durée de ladite au moins une trame, un traitement de moyennage (150) de la pluralité de fonctions de transfert dudit canal obtenues lors de ladite phase de détection de façon à obtenir une fonction de transfert moyenne (HM), et le décodage (151) des symboles de la trame suivant lesdits symboles de référence est effectué en utilisant cette fonction de transfert moyenne.

22. Récepteur, comprenant un étage d'entrée (ET1) destiné à être connecté sur un canal de transmission et configuré pour délivrer un signal analogique de canal issu du canal de transmission, un étage (CAN) de conversion analogique/numérique du signal analogique de canal pour délivrer un signal numérique et des moyens (ET2) de traitement dudit signal numérique, **caractérisé en ce que** les moyens de traitement comprennent des moyens de détection (MDET) configurés pour effectuer au moins une phase de détection de l'état du canal de transmission à partir dudit signal numérique de façon à détecter si le canal de transmission est considéré, sur un intervalle de temps, comme étant linéaire et temporellement invariant ou bien comme étant linéaire et cyclo-stationnaire,
récepteur dans lequel le signal analogique de canal véhicule des trames de symboles et les moyens de détection (MDET) sont configurés pour effectuer ladite phase de détection au cours de la réception d'au moins une trame, l'état détecté du canal étant considéré comme valable pour toute la durée de ladite au moins une trame,
et dans lequel les moyens de détection (MDET) comprennent des moyens d'estimation (MEST) configurés pour effectuer une pluralité d'estimations de canal respectivement à partir d'une pluralité de symboles de référence de ladite trame reçue de façon à obtenir une pluralité de fonctions de transfert dudit canal, des moyens de calcul (MCL) configurés pour déterminer au moins une différence de phase entre au moins une paire de fonctions de transfert, et des moyens de comparaison (CMP) configurés pour effectuer une comparaison de la valeur absolue de ladite au moins une différence de phase (DPHM) avec un seuil (TH), le canal étant considéré comme linéaire et temporellement invariant si la valeur absolue de ladite au moins une différence de phase est inférieure ou égale audit seuil et comme linéaire et cyclo-stationnaire dans le cas contraire.

23. Récepteur selon la revendication 22, dans lequel les moyens de détection (MDET) sont configurés pour effectuer ladite phase de détection au cours de la réception de chaque trame, l'état détecté du canal lors de la réception d'une trame courante étant considéré comme valable pour toute la durée de cette trame courante.

24. Récepteur selon l'une des revendications 22 ou 23, dans lequel le signal analogique de canal est issu d'une conversion numérique/analogique d'un signal numérique initial, et lorsque la fréquence d'échantillonnage du signal numérique est différente de la fréquence d'échantillonnage du signal numérique initial, les moyens d'estimation (MEST) sont en outre configurés pour effectuer des estimations de fonctions de transfert de base respectivement à partir de ladite pluralité de symboles de référence de ladite trame reçue, et un traitement de correction de ces fonctions de transfert de base avec un déphasage correspondant à ce décalage de fréquence d'échantillonnage de façon à délivrer lesdites fonctions de transfert.

25. Récepteur selon l'une des revendications 22 à 24, dans lequel l'ensemble des symboles de référence de la trame reçue s'étendent temporellement sur une durée totale égale ou légèrement supérieure à la période de cyclo-stationnarité éventuelle (PC) du canal et les deux fonctions de transfert de chaque paire sont respectivement associées à deux symboles de référence temporellement espacés d'une durée supérieure à une durée limite correspondant à un nombre minimum de symboles de référence.

26. Récepteur selon l'une des revendications 22 à 25, dans lequel les moyens de calcul (MCL) sont configurés pour déterminer plusieurs différences de phases entre respectivement plusieurs paires de fonctions de transfert et pour déterminer la moyenne des valeurs absolues de ces différences de phases de façon à obtenir une différence de phase moyenne, et les moyens de comparaison (CMP) sont configurés pour effectuer une comparaison de la différence de phase moyenne (DPHM) avec ledit seuil, le canal étant considéré comme linéaire et temporellement invariant si la ladite différence de phase moyenne est inférieure ou égale audit seuil et comme linéaire et cyclo-stationnaire dans le cas contraire.

27. Récepteur selon l'une des revendications 22 à 26, dans lequel les symboles de référence (SYMRᵢ) de la trame reçue correspondent à des symboles connus (S1, S2) de la trame transmise et/ou sont des symboles (FCHᵢ) décodables sans connaître la fonction de transfert du canal de transmission.

28. Récepteur selon la revendication 27, dans lequel les moyens d'estimation (MEST) sont configurés pour effectuer un décodage d'un symbole décodable reçu, un ré-encodage de ce symbole décodé de façon à obtenir un symbole ré-encodé et une détermination de la fonction de transfert associée à ce symbole décodable reçu, à partir dudit symbole ré-encodé et dudit symbole décodable reçu.

29. Récepteur selon l'une des revendications 22 à 28, dans lequel le signal est modulé selon une modulation OFDM.

30. Récepteur selon l'une des revendications 22 à 29, dans lequel le canal de transmission est une ligne électrique, le signal est destiné à être véhiculé par courant porteur de ligne et la période de cyclo-stationnarité éventuelle (PC) du canal est la moitié de la période du courant alternatif destiné à circuler sur ladite ligne électrique.

31. Récepteur selon la revendication 30, dans lequel le signal analogique de canal est conforme à la norme PLC-G3.

32. Récepteur selon les revendications 27 et 30, dans lequel chaque trame reçue (TRM) comporte un préambule (PRM) suivi d'un en-tête (HD) suivi d'un champ utile (PLD) et lesdits symboles de référence comportent les symboles de l'entête (FCHᵢ) et deux symboles du champ utile correspondant à deux symboles connus (S1, S2) de la trame transmise.

33. Récepteur selon la revendication 25 et l'une des revendications 31 ou 32, dans lequel ledit nombre limite de symboles de référence est égal à 6.

34. Récepteur selon la revendication 22 ou 26 et l'une des revendications 31 à 33, dans lequel ledit seuil est égal à 0,75 radian.

35. Récepteur selon l'une des revendications 22 à 34 prise en combinaison avec la revendication 23, dans lequel, lorsque le canal de transmission est considéré comme linéaire et cyclo-stationnaire pour toute la durée de ladite au moins une trame, les moyens de traitement comportent des moyens d'élaboration (MLB) configurés pour élaborer une séquence de N fonctions de transfert du canal de transmission respectivement associées à N tranches temporelles successives, la durée totale des N tranches temporelles étant égale à la quasi-totalité de la période de cyclo-stationnarité du canal ou à la totalité de ladite période, et des moyens de décodage (MDCD) configurés pour décoder certains au moins des symboles d'une trame en utilisant pour chacun de ces symboles la fonction de transfert associée à la tranche temporelle contenant ledit symbole.

36. Récepteur selon la revendication 35, dans lequel les moyens d'élaboration (MLB) sont configurés pour élaborer une séquence initiale de M fonctions de transfert respectivement associées à M symboles de référence successifs de chaque trame, les M symboles de référence couvrant temporellement une durée égale ou légèrement supérieure à la totalité de ladite période, et pour déterminer les N fonctions de transfert à partir de ces M fonctions de transfert.

37. Récepteur selon la revendication 36, dans lequel les M fonctions de transfert sont celles délivrées par les moyens d'estimation (MEST) incorporés dans les moyens de détection (MDET).

38. Récepteur selon les revendications 32 et 37, dans lequel M est égal à 15, N est égal à 7, et les moyens d'élaboration (MLB) sont configurés pour effectuer les moyennes deux à deux de quatorze fonctions de transfert successives de ladite séquence initiale de façon à obtenir les N fonctions de transfert.

39. Récepteur selon l'une des revendications 36 à 38, dans lequel les moyens de décodage (MDCD) sont configurés pour utiliser successivement et cycliquement les fonctions de transfert de la séquence des N fonctions de transfert de façon à décoder les symboles suivant le dernier symbole de référence.

40. Récepteur selon la revendication 39, dans lequel lorsque la durée des N tranches temporelles est différente de la période de cyclo-stationnarité, les moyens de décodage (MDCD) sont configurés pour effectuer périodiquement un décalage de fonction de transfert dans l'utilisation successive et cyclique des fonctions de transfert de façon à décoder les symboles suivant le dernier symbole de référence.

41. Récepteur selon la revendication 39 ou 40, dans lequel le signal est destiné à être véhiculé par courant porteur de ligne, la période de cyclo-stationnarité du canal est la moitié de la période du courant alternatif destiné à circuler sur ladite ligne électrique, l'étage d'entrée (ET1) est configuré pour délivrer en outre un signal de référence (ZCS) à chaque franchissement de zéro dudit courant alternatif, et les moyens de traitement (ET2) sont configurés pour recaler la valeur de la période de cyclo-stationnarité du canal à partir des occurrences dudit signal de référence.

42. Récepteur selon l'une des revendications 22 à 34, dans lequel, lorsque le canal de transmission est considéré comme linéaire et temporellement invariant pour toute la durée de ladite au moins une trame, les moyens de traitement comportent un module moyenneur (MMY) configuré pour effectuer un traitement de moyennage de la pluralité de fonctions de transfert dudit canal délivrées par les moyens de détection de façon à obtenir une fonction de transfert moyenne, et des moyens de décodage (MDCD) configurés pour décoder des symboles de la trame suivant lesdits symboles de référence en utilisant cette fonction de transfert moyenne (HM).

## Patentansprüche

1. Verarbeitungsverfahren eines aus einem Übertragungskanal stammenden analogen Kanalsignals, mindestens eine Erkennungsphase des Zustands des Übertragungskanals ausgehend von einem aus einer Analog-/Digital-Umwandlung des analogen Kanalsignals stammenden digitalen Kanalsignal (SNC), um zu erkennen, ob der Übertragungskanal, über ein Zeitintervall hinweg, als linear und zeitlich unveränderlich oder aber als linear und zyklostationär betrachtet wird,
**dadurch gekennzeichnet, dass** das analoge Kanalsignal (SAC) Symbolraster (TRM) transportiert und die Erkennungsphase im Laufe des Empfangs mindestens eines Rasters ausgeführt wird, wobei der erkannte Zustand des Kanals als für die gesamte Dauer des mindestens einen Rasters gültig betrachtet wird,
und dadurch, dass die Erkennungsphase eine Vielzahl von Kanalschätzungen (80) umfasst, die jeweils ausgehend von einer Vielzahl von Referenzsymbolen (SYMRᵢ) des empfangenen Rasters ausgeführt werden, um eine Vielzahl von Transferfunktionen (Hᵢ) des Kanals zu erhalten, eine Bestimmung (81, 82) mindestens eines Phasenunterschieds zwischen mindestens einem Transferfunktionspaar, und die Erkennung des Zustands einen Vergleich des absoluten Werts des mindestens einen Phasenunterschieds mit einem Schwellenwert (TH) beinhaltet, wobei der Kanal als linear und zeitlich unveränderlich betrachtet wird, wenn der absolute Wert des mindestens einen Phasenunterschieds kleiner als oder gleich dem Schwellenwert ist, und als linear und zyklostationär im gegenteiligen Fall.

2. Verfahren nach Anspruch 1, wobei die Erkennungsphase im Laufe des Empfangs jedes Rasters (TRM) ausgeführt wird, wobei der erkannte Zustand des Kanals beim Empfang eines laufenden Rasters als für die gesamte Dauer dieses laufenden Rasters gültig betrachtet wird.

3. Verfahren nach einem der Ansprüche 1 oder 2, wobei das analoge Kanalsignal aus einer Digital-/Analog-Umwandung eines ursprünglichen digitalen Signals stammt, und wenn sich die Abtastfrequenz des digitalen Signals von der Abtastfrequenz des ursprünglichen digitalen Signals unterscheidet, die Vielzahl von Kanalschätzungen Schätzungen (800) von Basistransferfunktionen (HBi) umfassen, die jeweils ausgehend von der Vielzahl von Referenzsymbolen des empfangenen Rasters ausgeführt werden, und eine Korrekturverarbeitung (801) dieser Basistransferfunktionen mit einer Phasenverschiebung (DPHC), die dieser Abtastfrequenzverschiebung entspricht, um die Transferfunktionen (Hᵢ) zu erhalten.

4. Verfahren nach einem der Ansprüche 1 bis 3, wobei sich sämtliche der Referenzsymbole des empfangenen Rasters zeitlich über eine Gesamtdauer gleich oder etwas größer als die eventuelle Zyklostationaritätsperiode (PC) des Kanals erstrecken, und die beiden Transferfunktionen jedes Paares jeweils zwei Referenzsymbolen zugeordnet sind, die zeitlich um eine Dauer beabstandet sind, die größer als eine zeitliche Beschränkung ist, die einer Mindestanzahl an Referenzsymbolen entspricht.

5. Verfahren nach einem der Ansprüche 1 bis 4, wobei die Erkennungsphase eine Bestimmung (81) mehrerer Phasenunterschiede (DPH₁-DPH₉) zwischen jeweils mehreren Transferfunktionspaaren umfasst, eine Vermittlungsverarbeitung (82) der absoluten Werte dieser Phasenunterschiede, um einen mittleren Phasenunterschied (DPHM) zu erhalten, und einen Vergleich des mittleren Phasenunterschieds mit dem Schwellenwert (TH), wobei der Kanal als linear und zeitlich unveränderlich betrachtet wird, wenn der mittlere Phasenunterschied kleiner als oder gleich dem Schwellenwert ist, und als linear und zyklostationär im gegenteiligen Fall.

6. Verfahren nach einem der Ansprüche 1 bis 5, wobei die Referenzsymbole des empfangenen Rasters bekannten Symbolen (S1, S2) des übertragenen Rasters entsprechen, und/oder Symbole (FCHᵢ) sind, die, ohne die Transferfunktion des Übertragungskanals zu kennen, decodierbar sind.

7. Verfahren nach Anspruch 6, wobei jede ausgehend von einem empfangenen decodierbaren Symbol (FCHᵢ) ausgeführte Kanalschätzung eine Decodierung (100) des empfangenen Symbols, eine erneute Codierung (101) dieses decodierten Symbols, um ein erneut codiertes Symbol (FCHECi) zu erhalten, und eine Bestimmung der Transferfunktion des Kanals ausgehend von dem erneut codierten Symbol und dem empfangenen decodierbaren Symbol umfasst.

8. Verfahren nach einem der vorstehenden Ansprüche, wobei das analoge Kanalsignal gemäß einer OFDM-Modulation moduliert wird.

9. Verfahren nach einem der vorstehenden Ansprüche, wobei der Übertragungskanal eine elektrische Leitung ist, das analoge Kanalsignal durch einen Leitungsträgerstrom transportiert wird, und die eventuelle Zyklostationaritätsperiode (PC) des Kanals der Hälfte der Periode des Wechselstroms entspricht, der dazu bestimmt ist, durch die elektrische Leitung zu zirkulieren.

10. Verfahren nach Anspruch 9, wobei das analoge Kanalsignal der Norm PLC-G3 entspricht.

11. Verfahren nach den Ansprüchen 6 und 10, wobei jedes empfangene Raster eine Präambel (PRM), gefolgt von einer Kopfzeile (HD), gefolgt von einem Nutzfeld (PLD) beinhaltet, und die Referenzsymbole die Symbole (FCHᵢ) der Kopfzeile und zwei Symbole (S1, S2) des Nutzfeldes beinhalten, die zwei bekannten Symbolen des übertragenen Rasters entsprechen.

12. Verfahren nach Anspruch 4 und einem der Ansprüche 10 oder 11, wobei die begrenzte Anzahl an Referenzsymbolen gleich 6 ist.

13. Verfahren nach Anspruch 1 oder 5 und einem der Ansprüche 10 bis 12, wobei der Schwellenwert (TH) gleich 0,75 Radiant ist.

14. Verfahren nach einem der vorstehenden Ansprüche, das, wenn der Übertragungskanal für die gesamte Dauer des mindestens einen Rasters als linear und zyklostationär betrachtet wird, weiter eine Ausarbeitung (100) einer Sequenz von N Transferfunktionen (Hᵢ) des Übertragungskanals, die jeweils N aufeinanderfolgenden zeitlichen Tranchen zugeordnet sind, umfasst, wobei die gesamte Dauer der N zeitlichen Tranchen gleich der Quasi-Gesamtheit der Zyklostationaritätsperiode (PC) des Kanals oder der Gesamtheit der Periode (PC) ist, und eine Decodierung mindestens einiger der Symbole eines Rasters unter Verwendung, für jedes dieser Symbole, der Transferfunktion, die der zeitlichen Tranche zugeordnet ist, die das Symbol enthält.

15. Verfahren nach Anspruch 14, wobei die Ausarbeitung der Sequenz von N Transferfunktionen eine Ausarbeitung einer ursprünglichen Sequenz von M Transferfunktionen (Hᵢ) umfasst, die jeweils M aufeinanderfolgenden Referenzsymbolen jedes Rasters zugeordnet sind, wobei die M Referenzsymbole zeitlich eine Dauer gleich oder etwas größer als die gesamte Periode abdecken, wobei die N Transferfunktionen (Hₖ) aus diesen M Transferfunktionen (Hᵢ) stammen.

16. Verfahren nach Anspruch 15, wobei die M Transferfunktionen (Hᵢ) jene sind, die bei der Erkennungsphase des Zustands des Übertragungskanals erhalten werden.

17. Verfahren nach einem der Ansprüche 11 und 16, wobei M gleich 15 ist, N gleich 7 ist, wobei die N Transferfunktionen (Hₖ) die paarweisen Mittelwerte von vierzehn aufeinanderfolgenden Transferfunktionen (H₂-H₁₅) der ursprünglichen Sequenz sind.

18. Verfahren nach einem der Ansprüche 15 bis 17, wobei die Decodierung der Symbole nach dem letzten Referenzsymbol nacheinander und zyklisch die Transferfunktionen der Sequenz der N Transferfunktionen (Hᵢ) verwendet.

19. Verfahren nach Anspruch 18, wobei, wenn sich die Dauer der N zeitlichen Tranchen von der Zyklostationaritätsperiode (PC) unterscheidet, die Decodierung der Symbole nach dem letzten Referenzsymbol ebenfalls periodisch einen Versatz (130) einer Transferfunktion bei der aufeinanderfolgenden und zyklischen Verwendung der Transferfunktionen umfasst.

20. Verfahren nach Anspruch 18 oder 19, wobei das Signal durch einen Leitungsträgerstrom transportiert wird, die Zyklostationaritätsperiode des Kanals der Hälfte der Periode des Wechselstroms entspricht, der dazu bestimmt ist, in der elektrischen Leitung zu zirkulieren, wobei ein Referenzsignal (ZCS) bei jeder Überschreitung von null des Wechselstroms abgegeben wird, und der Wert der Zyklostationaritätsperiode des Kanals ausgehend von den Eintritten des Referenzsignals erneut ausgerichtet wird.

21. Verfahren nach einem der Ansprüche 1 bis 13, das, wenn der Übertragungskanal für die gesamte Dauer des mindestens einen Rasters als linear und zeitlich unveränderlich betrachtet wird, weiter eine Vermittlungsverarbeitung (150) der Vielzahl von Transferfunktionen des Kanals, die bei der Erkennungsphase erhalten werden, umfasst, um eine mittlere Transferfunktion (HM) zu erhalten, und die Decodierung (151) der Symbole des Rasters nach den Referenzsymbolen durchgeführt wird, indem diese mittlere Transferfunktion verwendet wird.

22. Empfänger, umfassend eine Eingangsstufe (ET1), die dazu bestimmt ist, mit einem Übertragungskanal verbunden zu werden, und konfiguriert ist, um ein aus dem Übertragungskanal stammendes analoges Kanalsignal abzugeben, eine Analog-/Digital-Umwandungsstufe (CAN) des analogen Kanalsignals, um ein digitales Signal abzugeben, und Verarbeitungsmittel (ET2) des digitalen Signals, **dadurch gekennzeichnet, dass** die Verarbeitungsmittel Erkennungsmittel (MDET) umfassen, die konfiguriert sind, um mindestens eine Erkennungsphase des Zustands des Übertragungskanals ausgehend von dem digitalen Signal durchzuführen, um zu erkennen, ob der Übertragungskanal in einem Zeitintervall als linear und zeitlich unveränderlich, oder aber als linear und zyklostationär betrachtet wird,
wobei in dem Empfänger das analoge Kanalsignal Symbolraster transportiert und die Erkennungsmittel (MDET) konfiguriert sind, um die Erkennungsphase im Laufe des Empfangs mindestens eines Rasters auszuführen, wobei der erkannte Zustand des Kanals als für die gesamte Dauer des mindestens einen Rasters gültig betrachtet wird,
und wobei die Erkennungsmittel (MDET) Schätzungsmittel (MEST) umfassen, die konfiguriert sind, um eine Vielzahl von Kanalschätzungen jeweils ausgehend von einer Vielzahl von Referenzsymbolen des empfangenen Rasters auszuführen, um eine Vielzahl von Transferfunktionen des Kanals zu erhalten, Berechnungsmittel (MCL), die konfiguriert sind, um mindestens einen Phasenunterschied zwischen mindestens einem Transferfunktionspaar zu bestimmen, und Vergleichsmittel (CMP), die konfiguriert sind, um einen Vergleich des absoluten Werts des mindestens einen Phasenunterschieds (DPHM) mit einem Schwellenwert (TH) auszuführen, wobei der Kanal als linear und zeitlich unveränderlich betrachtet wird, wenn der absolute Wert des mindestens einen Phasenunterschieds kleiner als oder gleich dem Schwellenwert ist, und als linear und zyklostationär im gegenteiligen Fall.

23. Empfänger nach Anspruch 22, wobei die Erkennungsmittel (MDET) konfiguriert sind, um die Phasenerkennung im Laufe des Empfangs jedes Rasters auszuführen, wobei der erkannte Zustand des Kanals beim Empfang eines laufenden Rasters als für die gesamte Dauer dieses laufenden Rasters gültig betrachtet wird.

24. Empfänger nach einem der Ansprüche 22 oder 23, wobei das analoge Kanalsignal aus einer Digital-/Analog-Umwandung eines ursprünglichen digitalen Signals stammt, und wenn sich die Abtastfrequenz des digitalen Signals von der Abtastfrequenz des ursprünglichen digitalen Signals unterscheidet, die Schätzungsmittel (MEST) weiter konfiguriert sind, um Basistransferfunktionsschätzungen jeweils ausgehend von der Vielzahl von Referenzsymbolen des empfangenen Rasters auszuführen, und eine Korrekturverarbeitung dieser Basistransferfunktionen mit einer Phasenverschiebung, die dieser Abtastfrequenzverschiebung entspricht, um die Transferfunktionen abzugeben.

25. Empfänger nach einem der Ansprüche 22 bis 24, wobei sich sämtliche der Referenzsymbole des empfangenen Rasters zeitlich über eine Gesamtdauer gleich oder etwas größer als die eventuelle Zyklostationaritätsperiode (PC) des Kanals erstrecken, und die beiden Transferfunktionen jedes Paares jeweils zwei Referenzsymbolen zugeordnet sind, die die zeitlich um eine Dauer beabstandet sind, die größer als eine zeitliche Beschränkung ist, die einer Mindestanzahl an Referenzsymbolen entspricht.

26. Empfänger nach einem der Ansprüche 22 bis 25, wobei die Berechnungsmittel (MCL) konfiguriert sind, um mehrere Phasenunterschiede zwischen jeweils mehreren Transferfunktionspaaren zu bestimmen, und um den Mittelwert der absoluten Werte dieser Phasenunterschiede zu bestimmen, um einen mittleren Phasenunterschied zu erhalten, und die Vergleichsmittel (CMP) konfiguriert sind, um einen Vergleich des mittleren Phasenunterschieds (DPHM) mit dem Schwellenwert auszuführen, wobei der Kanal als linear und zeitlich unveränderlich betrachtet wird, wenn der mittlere Phasenunterschied kleiner als oder gleich dem Schwellenwert ist, und als linear und zyklostationär im gegenteiligen Fall.

27. Empfänger nach einem der Ansprüche 22 bis 26, wobei die Referenzsymbole (SYMRᵢ) des empfangenen Rasters bekannten Symbolen (S1, S2) des übertragenen Rasters entsprechen, und/oder Symbole (FCHᵢ) sind, die, ohne die Transferfunktion des Übertragungskanals zu kennen, decodierbar sind.

28. Empfänger nach Anspruch 27, wobei die Schätzungsmittel (MEST) konfiguriert sind, um eine Decodierung eines empfangenen decodierbaren Symbols, eine erneute Codierung dieses decodierten Symbols, um ein erneut codiertes Symbol zu erhalten, und eine Bestimmung der Transferfunktion, die diesem empfangenen decodierbaren Symbol zugeordnet ist, ausgehend von dem erneut codierten Symbol und dem empfangenen decodierbaren Symbol auszuführen.

29. Empfänger nach einem der Ansprüche 22 bis 28, wobei das Signal gemäß einer OFDM-Modulation moduliert wird.

30. Empfänger nach einem der Ansprüche 22 bis 29, wobei der Übertragungskanal eine elektrische Leitung ist, das Signal dazu bestimmt ist, durch einen Leitungsträgerstrom transportiert zu werden, und die eventuelle Zyklostationaritätsperiode (PC) des Kanals der Hälfte der Periode des Wechselstroms entspricht, der dazu bestimmt ist, durch die elektrische Leitung zu zirkulieren.

31. Empfänger nach Anspruch 30, wobei das analoge Kanalsignal der der Norm PLC-G3 entspricht.

32. Empfänger nach den Ansprüchen 27 und 30, wobei jedes empfangene Raster (TRM) eine Präambel (PRM), gefolgt von einer Kopfzeile (HD), gefolgt von einem Nutzfeld (PLD) beinhaltet, und die Referenzsymbole die Symbole (FCHᵢ) der Kopfzeile und zwei Symbole des Nutzfeldes beinhalten, die zwei bekannten Symbolen (S1, S2) des übertragenen Rasters entsprechen.

33. Empfänger nach Anspruch 25 und einem der Ansprüche 31 oder 32, wobei die begrenzte Anzahl an Referenzsymbolen gleich 6 ist.

34. Empfänger nach Anspruch 22 oder 26 und einem der Ansprüche 31 bis 33, wobei der Schwellenwert gleich 0,75 Radiant ist.

35. Empfänger nach einem der Ansprüche 22 bis 34 in Kombination mit Anspruch 23, wobei, wenn der Übertragungskanal für die gesamte Dauer des mindestens einen Rasters als linear und zyklostationär betrachtet wird, die Verarbeitungsmittel Ausarbeitungsmittel (MLB) beinhalten, die konfiguriert sind, um eine Sequenz von N Transferfunktionen des Übertragungskanals, die jeweils N aufeinanderfolgenden zeitlichen Tranchen zugeordnet sind, auszuarbeiten, wobei die gesamte Dauer der N zeitlichen Tranchen gleich der Quasi-Gesamtheit der Zyklostationaritätsperiode des Kanals oder der Gesamtheit der Periode ist, und Decodierungsmittel (MDCD) konfiguriert sind, um mindestens einige der Symbole eines Rasters unter Verwendung, für jedes dieser Symbole, der Transferfunktion zu decodieren, die der zeitlichen Tranche zugeordnet ist, die das Symbol enthält.

36. Empfänger nach Anspruch 35, wobei die Ausarbeitungsmittel (MLB) konfiguriert sind, um eine ursprüngliche Sequenz von M Transferfunktionen, die jeweils M aufeinanderfolgenden Referenzsymbolen jedes Rasters zugeordnet sind, auszuarbeiten, wobei die M Referenzsymbole zeitlich eine Dauer gleich oder etwas größer als die gesamte Periode abdecken, und um die N Transferfunktionen aus diesen M Transferfunktionen zu bestimmen.

37. Empfänger nach Anspruch 36, wobei die M Transferfunktionen jene sind, die von den Schätzungsmitteln (MEST), die in die Erkennungsmittel (MDET) einbezogen sind, abgegeben werden.

38. Empfänger nach den Ansprüchen 32 und 37, wobei M gleich 15 ist, N gleich 7 ist, und die Ausarbeitungsmittel (MLB) konfiguriert sind, um die paarweisen Mittelwerte von vierzehn aufeinanderfolgenden Transferfunktionen der ursprünglichen Sequenz auszuführen, um die N Transferfunktionen zu erhalten.

39. Empfänger nach einem der Ansprüche 36 bis 38, wobei die Decodierungsmittel (MDCD) konfiguriert sind, um nacheinander und zyklisch die Transferfunktionen der Sequenz der N Transferfunktionen zu verwenden, um die Symbole nach dem letzten Referenzsymbol zu decodieren.

40. Empfänger nach Anspruch 39, wobei, wenn sich die Dauer der N zeitlichen Tranchen von der Zyklostationaritätsperiode unterscheidet, die Decodierungsmittel (MDCD) konfiguriert sind, um periodisch einen Versatz einer Transferfunktion bei der aufeinanderfolgenden und zyklischen Verwendung der Transferfunktionen auszuführen, um die Symbole nach dem letzten Referenzsymbol zu decodieren.

41. Empfänger nach Anspruch 39 oder 40, wobei das Signal dazu bestimmt ist, durch einen Leitungsträgerstrom transportiert zu werden, wobei die Zyklostationaritätsperiode des Kanals der Hälfte der Periode des Wechselstroms entspricht, der dazu bestimmt ist, in der elektrischen Leitung zu zirkulieren, die Eingangsstufe (ET1) konfiguriert ist, um weiter ein Referenzsignal (ZCS) bei jeder Überschreitung von null des Wechselstroms abzugeben, und die Verarbeitungsmittel (ET2) konfiguriert sind, um den Wert der Zyklostationaritätsperiode des Kanals ausgehend von den Eintritten des Referenzsignals erneut auszurichten.

42. Empfänger nach einem der Ansprüche 22 bis 34, wobei, wenn der Übertragungskanal für die gesamte Dauer des mindestens einen Rasters als linear und zeitlich unveränderlich betrachtet wird, die Verarbeitungsmittel ein Vermittlungsmodul (MMY) beinhalten, das konfiguriert ist, um eine Vermittlungsverarbeitung der Vielzahl von Transferfunktionen des Kanals, die durch die Erkennungsmittel abgegeben werden, auszuführen, um eine mittlere Transferfunktion zu erhalten, und die Decodierungsmittel (MDCD) konfiguriert sind, um Symbole des Rasters nach den Referenzsymbolen zu decodieren, indem diese mittlere Transferfunktion (HM) verwendet wird.

## Claims

1. A method for processing an analogue channel signal from a transmission channel, comprising at least one phase of detecting the state of the transmission channel from a digital channel signal (SNC) from an analogue/digital conversion of the analogue channel signal so as to detect whether the transmission channel is considered, over a time interval, to be linear and temporally invariant or else linear and cyclostationary,
**characterised in that** the analogue channel signal (SAC) conveys symbol frames (TRM) and said detection phase is performed during the reception of at least one frame, the detected state of the channel being considered valid for the entire duration of said at least one frame.
and **in that** said detection phase comprises a plurality of channel estimations (80) respectively made from a plurality of reference symbols (SYMRᵢ) of said received frame so as to obtain a plurality of transfer functions (Hᵢ) of said channel, a determination (81, 82) of at least one phase difference between at least one pair of transfer functions, and the detection of said state includes comparing the absolute value of said at least one phase difference with a threshold (TH), the channel being considered linear and temporally invariant if the absolute value of said at least one phase difference is less than or equal to said threshold and linear and cyclostationary in the opposite case.

2. The method according to claim 1, wherein the detection phase is performed during the reception of each frame (TRM), the detected state of the channel during the reception of a current frame being considered valid for the entire duration of this current frame.

3. The method according to one of claims 1 or 2, wherein the analogue channel signal is derived from a digital/analogue conversion of an initial digital signal, and when the sampling frequency of the digital signal is different from the sampling frequency of the initial digital signal, said plurality of channel estimations comprise estimations (800) of basic transfer functions (HBi) respectively made from said plurality of reference symbols of said received frame, and a correction processing (801) of these basic transfer functions with a phase shift (DPHC) corresponding to this sampling frequency offset so as to obtain said transfer functions (Hᵢ).

4. The method according to one of claims 1 to 3, wherein the set of reference symbols of the received frame extend temporally over a total duration equal to or slightly greater than the possible cyclostationarity period (PC) of the channel and the two transfer functions of each pair are respectively associated with two reference symbols temporally spaced by a duration greater than a limit duration corresponding to a minimum number of reference symbols.

5. The method according to one of claims 1 to 4, wherein the detection phase comprises a determination (81) of several phase differences (DPH₁-DPH₉) between respectively several pairs of transfer functions, an averaging processing (82) of the absolute values of these phase differences so as to obtain an average phase difference (DPHM), and a comparison of the average phase difference with said threshold (TH), the channel being considered linear and temporally invariant if said average phase difference is less than or equal to said threshold and linear and cyclostationary in the opposite case.

6. The method according to one of claims 1 to 5, wherein the reference symbols of the received frame correspond to known symbols (S1, S2) of the transmitted frame and/or are decodable symbols (FCHᵢ) without knowing the transfer function of the transmission channel.

7. The method according to claim 6, wherein each channel estimation performed on the basis of a received decodable symbol (FCHᵢ) comprises a decoding (100) of the received symbol, a re-encoding (101) of this decoded symbol so as to obtaining a re-encoded symbol (FCHECi) and a determination of the transfer function of the channel from said re-encoded symbol and from said received decodable symbol.

8. The method according to one of the preceding claims, wherein the analogue channel signal is modulated according to an OFDM modulation.

9. The method according to one of the preceding claims, wherein the transmission channel is an electric line, the analogue channel signal is conveyed by line carrier current and the possible cyclostationarity period (PC) of the channel is half the period of the alternating current intended to flow on said electric line.

10. The method according to claim 9, wherein the analogue channel signal conforms to the PLC-G3 standard.

11. The method according to claims 6 and 10, wherein each frame received includes a preamble (PRM) followed by a header (HD) followed by a useful field (PLD) and said reference symbols include the symbols (FCHᵢ) of the header and two symbols (S1, S2) of the useful field corresponding to two known symbols of the transmitted frame.

12. The method according to claim 4 and one of claims 10 or 11, wherein said limit number of reference symbols is equal to 6.

13. The method according to claim 1 or 5 and one of claims 10 to 12, wherein said threshold (TH) is equal to 0.75 radians.

14. The method according to one of the preceding claims, further comprising, when the transmission channel is considered to be linear and cyclostationary for the entire duration of said at least one frame, an elaboration (100) of a sequence of N transfer functions (Hᵢ) of the transmission channel respectively associated with N successive time slots, the total duration of the N time slots being equal to almost the entire cyclostationarity period (PC) of the channel or to the entire said period (PC), and a decoding of at least some of the symbols of a frame by using for each of these symbols the transfer function associated with the time slot containing said symbol.

15. The method according to claim 14, wherein the elaboration of the sequence of the N transfer functions comprises an elaboration of an initial sequence of M transfer functions (Hᵢ) respectively associated with M successive reference symbols of each frame, the M reference symbols temporally covering a duration equal to or slightly greater than the entire said period, the N transfer functions (Hₖ) being derived from these M transfer functions (Hᵢ).

16. The method according to claim 15, wherein the M transfer functions (Hᵢ) are those obtained during the phase of detecting the state of the transmission channel.

17. The method according to claims 11 and 16, wherein M is equal to 15, N is equal to 7, the N transfer functions (Hₖ) being the two by two averages of fourteen successive transfer functions (H₂-H₁₅) of said initial sequence.

18. The method according to one of claims 15 to 17, wherein the decoding of the symbols following the last reference symbol successively and cyclically uses the transfer functions of the sequence of N transfer functions (Hᵢ).

19. The method according to claim 18, wherein when the duration of the N time slots is different from the cyclostationarity period (PC), the decoding of the symbols following the last reference symbol also periodically comprises a transfer function shift (130) in the successive and cyclic use of the transfer functions.

20. The method according to claim 18 or 19, wherein the signal is conveyed by line carrier current, the cyclostationarity period of the channel is half the period of the alternating current intended to flow on said electric line, wherein a signal reference (ZCS) is delivered at each zero crossing of said alternating current, and the value of the cyclostationarity period of the channel is reset from the occurrences of said reference signal.

21. The method according to one of claims 1 to 13, further comprising, when the transmission channel is considered to be linear and temporally invariant for the entire duration of said at least one frame, an averaging processing (150) of the plurality of transfer functions of said channel obtained during said detection phase so as to obtain an average transfer function (HM), and the decoding (151) of the symbols of the frame according to said reference symbols is carried out using this average transfer function.

22. A receiver, comprising an input stage (ET1) intended to be connected to a transmission channel and configured to deliver an analogue channel signal from the transmission channel, an analogue/digital conversion stage (CAN) of the analogue signal channel for delivering a digital signal and means (ET2) for processing said digital signal, **characterised in that** the processing means comprise detection means (MDET) configured to perform at least one phase of detecting the state of the transmission channel from said digital signal so as to detect whether the transmission channel is considered, over a time interval, to be linear and temporally invariant or else linear and cyclostationary,
receiver wherein the analogue channel signal conveys symbol frames and the detection means (MDET) are configured to perform said detection phase during the reception of at least one frame, the detected state of the channel being considered valid for the entire duration of said at least one frame,
and wherein the detection means (MDET) comprise estimation means (MEST) configured to perform a plurality of channel estimations respectively from a plurality of reference symbols of said received frame so as to obtain a plurality of transfer functions of said channel, calculation means (MCL) configured to determine at least one phase difference between at least one pair of transfer functions, and comparison means (CMP) configured to perform a comparison of the absolute value of said at least one phase difference (DPHM) with a threshold (TH), the channel being considered linear and temporally invariant if the absolute value of said at least one phase difference is less than or equal to said threshold and linear and cyclostationary in the opposite case.

23. The receiver according to claim 22, wherein the detection means (MDET) are configured to perform said detection phase during the reception of each frame, the detected state of the channel during the reception of a current frame being considered valid for the entire duration of this current frame.

24. The receiver according to one of claims 22 or 23, wherein the analogue channel signal is derived from a digital/analogue conversion of an initial digital signal, and when the sampling frequency of the digital signal is different from the sampling frequency of the initial digital signal, the estimation means (MEST) are further configured to perform estimations of basic transfer functions respectively from said plurality of reference symbols of said received frame, and a correction processing of these basic transfer functions with a phase shift corresponding to this sampling frequency offset so as to deliver said transfer functions.

25. The receiver according to one of claims 22 to 24, wherein the set of reference symbols of the received frame extend temporally over a total duration equal to or slightly greater than the possible cyclostationarity period (PC) of the channel and the two transfer functions of each pair are respectively associated with two reference symbols temporally spaced by a duration greater than a limit duration corresponding to a minimum number of reference symbols.

26. The receiver according to one of claims 22 to 25, wherein the calculation means (MCL) are configured to determine several phase differences between respectively several pairs of transfer functions and to determine the average of the absolute values of these phase differences so as to obtain an average phase difference, and the comparison means (CMP) are configured to perform a comparison of the average phase difference (DPHM) with said threshold, the channel being considered linear and temporally invariant if said average phase difference is less than or equal to said threshold and linear and cyclostationary in the opposite case.

27. The receiver according to one of claims 22 to 26, wherein the reference symbols (SYMRᵢ) of the received frame correspond to known symbols (S1, S2) of the transmitted frame and/or are decodable symbols (FCHᵢ) without knowing the transfer function of the transmission channel.

28. The receiver according to claim 27, wherein the estimation means (MEST) are configured to perform a decoding of a received decodable symbol, a re-encoding of this decoded symbol so as to obtain a re-encoded symbol and a determination of the transfer function associated with this received decodable symbol, from said re-encoded symbol and from said received decodable symbol.

29. The receiver according to one of claims 22 to 28, wherein the signal is modulated according to an OFDM modulation.

30. The receiver according to one of claims 22 to 29, wherein the transmission channel is an electric line, the signal is intended to be conveyed by line carrier current and the possible cyclostationarity period (PC) of the channel is half the period of the alternating current intended to flow on said electric line.

31. The receiver according to claim 30, wherein the analogue channel signal conforms to the PLC-G3 standard.

32. The receiver according to claims 27 and 30, wherein each received frame (TRM) includes a preamble (PRM) followed by a header (HD) followed by a useful field (PLD) and said reference symbols include the symbols (FCHᵢ) of the header and two symbols of the useful field corresponding to two known symbols (S1, S2) of the transmitted frame.

33. The receiver according to claim 25 and one of claims 31 or 32, wherein said limit number of reference symbols is equal to 6.

34. The receiver according to claim 22 or 26 and one of claims 31 to 33, wherein said threshold is equal to 0.75 radians.

35. The receiver according to one of claims 22 to 34 as combined with claim 23, wherein, when the transmission channel is considered to be linear and cyclostationary for the entire duration of said at least one frame, the processing means include elaboration means (MLB) configured to elaborate a sequence of N transfer functions of the transmission channel respectively associated with N successive time slots, the total duration of the N time slots being equal to almost the entire cyclostationarity period of the channel or to the entire said period, and decoding means (MDCD) configured to decode at least some of the symbols of a frame by using for each of these symbols the transfer function associated with the time slot containing said symbol.

36. The receiver according to claim 35, wherein the elaboration means (MLB) are configured to elaborate an initial sequence of M transfer functions respectively associated with M successive reference symbols of each frame, the M reference symbols temporally covering a duration equal to or slightly greater than the entire said period, and to determine the N transfer functions from these M transfer functions.

37. The receiver according to claim 36, wherein the M transfer functions are those delivered by the estimation means (MEST) incorporated in the detection means (MDET).

38. The receiver according to claims 32 and 37, wherein M is equal to 15, N is equal to 7, and the elaboration means (MLB) are configured to perform the two by two averages of fourteen successive transfer functions of said initial sequence so as to obtain the N transfer functions.

39. The receiver according to one of claims 36 to 38, wherein the decoding means (MDCD) are configured to successively and cyclically use the transfer functions of the sequence of N transfer functions so as to decode the symbols following the last reference symbol.

40. The receiver according to claim 39, wherein when the duration of the N time slots is different from the cyclostationarity period, the decoding means (MDCD) are configured to periodically perform a transfer function shift in the successive and cyclic use of the transfer functions so as to decode the symbols following the last reference symbol.

41. The receiver according to claim 39 or 40, wherein the signal is intended to be conveyed by line carrier current, the cyclostationarity period of the channel is half the period of the alternating current intended to flow on said electric line, the input stage (ET1) is configured to further deliver a reference signal (ZCS) at each zero crossing of said alternating current, and the processing means (ET2) are configured to reset the value of the cyclostationarity period of the channel from the occurrences of said reference signal.

42. The receiver according to one of claims 22 to 34, wherein, when the transmission channel is considered to be linear and temporally invariant for the entire duration of said at least one frame, the processing means include an averaging module (MMY) configured to perform an averaging processing of the plurality of transfer functions of said channel delivered by the detection means so as to obtain an average transfer function, and decoding means (MDCD) configured to decode symbols of the frame following said reference symbols using this average transfer function (HM) .
